# EUROPEAN PATENT SPECIFICATION

(11) **EP 4 272 510 B1**
(45) Date of publication and mention of the grant of the patent: **11.09.2024**
(21) Application number: 21843924.8
(22) Date of filing: 20.12.2021
(51) Int. Cl.: H04W 76/15, H04W 28/02, H04W 72/21, H04L 5/00

(54) **REPORTING UPLINK DATA ARRIVAL FOR DEACTIVATED SECONDARY CELL GROUP (SCG)**
MELDUNG DER ANKUNFT VON UPLINK-DATEN FÜR DEAKTIVIERTE SEKUNDÄRZELLENGRUPPE (SCG)
RAPPORT D'ARRIVÉE DE DONNÉES DE LIAISON MONTANTE POUR GROUPE DE CELLULES SECONDAIRES (SCG) DÉSACTIVÉES

(30) Priority: 29.12.2020 US 202063131364 P
(43) Date of publication of application: 08.11.2023
(73) Proprietor: Telefonaktiebolaget LM Ericsson (publ), 164 83 Stockholm (SE)
(72) Inventor: WALLENTIN, Pontus, 582 39 Linköping (SE); DA SILVA, Icaro Leonardo, 170 77 Solna (SE); BERGQVIST, Jens, 587 37 Linköping (SE); WAGER, Stefan, 023 60 Espoo (FI); ZOU, Zhenhua, 171 42 Solna (SE); QIU, Liwei, 183 38 Täby (SE)
(74) Representative: Ericsson
(86) International application number: PCT/EP2021/086914
(87) International publication number: WO 2022/144223

(56) References cited:
- WO-A1-2020/114372

## Description

### TECHNICAL FIELD

The present disclosure relates generally to wireless networks and mores specifically to techniques that reduce the energy consumed by a user equipment (UE) when connected to multiple cell groups in a wireless network, particularly when one of the cell groups is in a deactivated state.

### BACKGROUND

Long-Term Evolution (LTE) is an umbrella term for so-called fourth-generation (4G) radio access technologies developed within the Third-Generation Partnership Project (3GPP) and initially standardized in Release 8 (Rel-8) and Release 9 (Rel-9), also known as Evolved UTRAN (E-UTRAN). LTE is targeted at various licensed frequency bands and is accompanied by improvements to non-radio aspects commonly referred to as System Architecture Evolution (SAE), which includes Evolved Packet Core (EPC) network. LTE continues to evolve through subsequent releases.

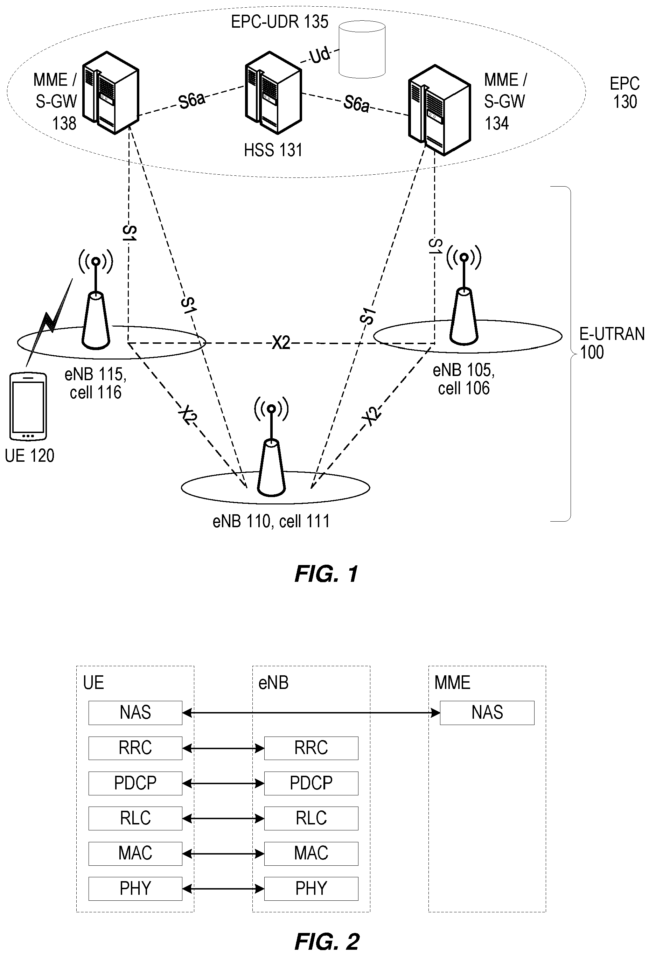

An overall exemplary architecture of a network comprising LTE and SAE is shown in Figure 1. E-UTRAN 100 includes one or more evolved Node B's (eNB), such as eNBs 105, 110, and 115, and one or more user equipment (UE), such as UE 120. As used within the 3GPP standards, "user equipment" or "UE" means any wireless communication device (e.g., smartphone or computing device) that is capable of communicating with 3GPP-standard-compliant network equipment, including E-UTRAN as well as UTRAN and/or GERAN, as the third-generation ("3G") and second-generation ("2G") 3GPP RANs are commonly known.

As specified by 3GPP, E-UTRAN 100 is responsible for all radio-related functions in the network, including radio bearer control, radio admission control, radio mobility control, scheduling, and dynamic allocation of resources to UEs in uplink and downlink, as well as security of the communications with the UE. These functions reside in the eNBs, such as eNBs 105, 110, and 115. Each of the eNBs can serve a geographic coverage area including one or more cells, including cells 106, 111, and 115 served by eNBs 105, 110, and 115, respectively.

The eNBs in the E-UTRAN communicate with each other via the X2 interface, as shown in Figure 1. The eNBs also are responsible for the E-UTRAN interface to the EPC 130, specifically the S1 interface to the Mobility Management Entity (MME) and the Serving Gateway (SGW), shown collectively as MME/S-GWs 134 and 138 in Figure 1. In general, the MME/S-GW handles both the overall control of the UE and data flow between the UE and the rest of the EPC. More specifically, the MME processes the signaling (*e.g.,* control plane) protocols between the UE and the EPC, which are known as the Non-Access Stratum (NAS) protocols. The S-GW handles all Internet Protocol (IP) data packets (*e.g.,* data or user plane) between the UE and the EPC and serves as the local mobility anchor for the data bearers when the UE moves between eNBs, such as eNBs 105, 110, and 115.

EPC 130 can also include a Home Subscriber Server (HSS) 131, which manages user- and subscriber-related information. HSS 131 can also provide support functions in mobility management, call and session setup, user authentication and access authorization. The functions *o*f HSS 131 can be related to the functions of legacy Home Location Register (HLR) and Authentication Centre (AuC) functions or operations. HSS 131 can also communicate with MMEs 134 and 138 via respective S6a interfaces.

In some embodiments, HSS 131 can communicate with a user data repository (UDR) - labelled EPC-UDR 135 in Figure 1 - via a Ud interface. EPC-UDR 135 can store user credentials after they have been encrypted by AuC algorithms. These algorithms are not standardized (i.e., vendor-specific), such that encrypted credentials stored in EPC-UDR 135 are inaccessible by any other vendor than the vendor of HSS 131.

Figure 2 illustrates a block diagram of an exemplary control plane (CP) protocol stack between a UE, an eNB, and an MME. The exemplary protocol stack includes Physical (PHY), Medium Access Control (MAC), Radio Link Control (RLC), Packet Data Convergence Protocol (PDCP), and Radio Resource Control (RRC) layers between the UE and eNB. The PHY layer is concerned with how and what characteristics are used to transfer data over transport channels on the LTE radio interface. The MAC layer provides data transfer services on logical channels, maps logical channels to PHY transport channels, and reallocates PHY resources to support these services. The RLC layer provides error detection and/or correction, concatenation, segmentation, and reassembly, reordering of data transferred to or from the upper layers. The PDCP layer provides ciphering/deciphering and integrity protection for both CP and user plane (UP), as well as other UP functions such as header compression. The exemplary protocol stack also includes non-access stratum (NAS) signaling between the UE and the MME.

The RRC layer controls communications between a UE and an eNB at the radio interface, as well as the mobility of a UE between cells in the E-UTRAN. After a UE is powered ON it will be in the RRC_IDLE state until an RRC connection is established with the network, at which time the UE will transition to RRC_CONNECTED state (*e.g.,* where data transfer can occur). The UE returns to RRC_IDLE after the connection with the network is released. In RRC_IDLE state, the UE does not belong to any cell, no RRC context has been established for the UE (*e.g.,* in E-UTRAN), and the UE is out of UL synchronization with the network. Even so, a UE in RRC_IDLE state is known in the EPC and has an assigned IP address.

Furthermore, in RRC_IDLE state, the UE's radio is active on a discontinuous reception (DRX) schedule configured by upper layers. During DRX active periods (also referred to as "DRX On durations"), an RRC_IDLE UE receives system information (SI) broadcast by a serving cell, performs measurements of neighbor cells to support cell reselection, and monitors a paging channel for pages from the EPC via an eNB serving the cell in which the UE is camping.

A UE must perform a random-access (RA) procedure to move from RRC_IDLE to RRC _CONNECTED state. In RRC_CONNECTED state, the cell serving the UE is known and an RRC context is established for the UE in the serving eNB, such that the UE and eNB can communicate. For example, a Cell Radio Network Temporary Identifier (C-RNTI) - a UE identity used for signaling between UE and network - is configured for a UE in RRC _CONNECTED state.

3GPP Rel-10 supports bandwidths larger than 20 MHz. One important Rel-10 requirement is backward compatibility with Rel-8. As such, a wideband LTE Rel-10 carrier (*e.g.,* >20 MHz) should appear as a plurality of carriers ("component carriers" or CCs) to a Rel-8 ("legacy") terminal. Legacy terminals can be scheduled in all parts of the wideband Rel-10 carrier. One way to achieve this is by Carrier Aggregation (CA), whereby a Rel-10 terminal can receive multiple CCs, each preferably having the same structure as a Rel-8 carrier.

LTE dual connectivity (DC) was introduced in Rel-12. In DC operation, a UE in RRC _CONNECTED state consumes radio resources provided by at least two different network points connected to one another with a non-ideal backhaul. In LTE, these two network points may be referred to as a "Master eNB" (MeNB) and a "Secondary eNB" (SeNB). More generally, the terms master node (MN), anchor node, and MeNB can be used interchangeably, while the terms secondary node (SN), booster node, and SeNB can also be used interchangeably. DC can be viewed as a special case of CA, in which the aggregated carriers (or cells) are provided by network nodes that are physically separated and not connected via a robust, high-capacity connection.

Currently the fifth generation ("5G") of cellular systems, also referred to as New Radio (NR), is being standardized within the Third-Generation Partnership Project (3GPP). NR is developed for maximum flexibility to support a variety of different use cases. These include enhanced mobile broadband (eMBB), machine type communications (MTC), ultra-reliable low latency communications (URLLC), side-link device-to-device (D2D), and several other use cases. 5G/NR technology shares many similarities with fourth-generation LTE. For example, both PHYs utilize similar arrangements of time-domain physical resources into 1-ms subframes that include multiple slots of equal duration, with each slot including multiple OFDM-based symbols. As another example, NR RRC layer includes RRC_IDLE and RRC_CONNECTED states, but adds another state known as RRC_INACTIVE.

DC is also envisioned as an important feature for 5G/NR networks. Several DC (or more generally, multi-connectivity) scenarios have been considered for NR. These include NR-DC that is similar to LTE-DC discussed above, except that both the MN and SN (referred to as "gNBs") employ the NR interface to communicate with the UE. In addition, various multi-RAT DC (MR-DC) scenarios have been considered, whereby a UE can be configured to uses resources provided by two different nodes, one providing E-UTRA/LTE access and the other one providing NR access. One node acts as the MN (e.g., providing MCG) and the other as the SN (e.g., providing SCG), with the MN and SN being connected via a network interface and at least the MN being connected to a core network (e.g., EPC or 5GC).

Each of the CGs includes one MAC entity, a primary cell (PCell), and optionally one or more secondary cells (SCells). The term "Special Cell" (or "SpCell" for short) refers to the PCell of the MCG or the PSCell of the SCG depending on whether the UE's MAC entity is associated with the MCG or the SCG, respectively. In non-DC operation (*e.g.,* CA), SpCell refers to the PCell. An SpCell is always activated and supports physical UL control channel (PUCCH) transmission and contention-based random access by UEs.

In order to improve network energy efficiency and battery life for UEs in MR-DC, 3GPP Rel-17 includes a work item for efficient SCG/SCell activation/deactivation. This can be especially important for MR-DC configurations with NR SCG since it has been found that, in some cases, NR UE energy consumption is three-to-four times higher than in LTE.

WO 2020/114372 A1 shows a UE requesting SCG activation when UL data to be transmitted over the SCG is detected.

### SUMMARY

When the UE's SCG is deactivated (or, more generally, in a reduced-energy mode such as SCG suspended, SCG dormant, etc.), however, the UE may be unable to notify the network of arrival of UL data (e.g., from application layer and/or NAS) needing to be transmitted by the UE. This can cause various problems, issues, and/or difficulties related to SN awareness and scheduling of SCG resources for UL data transmission.

Embodiments of the present disclosure provide specific improvements to UL data transmission procedures in a wireless network, such as by facilitating solutions to overcome exemplary problems summarized above and described in more detail below.

Embodiments of the present disclosure include methods (e.g., procedures) for a UE configured with an MCG and an SCG in a wireless network.

According to a first aspect, the present invention provides a method for a user equipment as defined by the subject-matter of independent claim 1. According to a second aspect, the present invention provides a method for a first node configured to provide a master cell group as defined by the subject-matter of independent claim 15. According to a third aspect, the present invention provides a user equipment as defined by independent claim 17. According to a fourth aspect, the present invention provides a computer program product as defined by independent claim 19. According to a fifth aspect, the present invention provides a first node as defined by independent claim 20. According to a sixth aspect, the present invention provides a computer program product as defined by independent claim 22.

These and other embodiments described herein can facilitate a UE's secondary node (SN) to be aware that the UE's deactivated SCG has available UL data associated with an SCG bearer and/or a split bearer. This allows the SN to timely activate the deactivated SCG, thereby avoiding delays in receiving the available UL data. By avoiding such delays, performance of UE applications generating UL data can be improved, which ultimately improves user experience.

These and other objects, features, and advantages of embodiments of the present disclosure will become apparent upon reading the following Detailed Description in view of the Drawings briefly described below.

### BRIEF DESCRIPTION OF THE DRAWINGS

Figure 1 shows a high-level view of an exemplary LTE network architecture.
Figure 2 shows exemplary LTE control plane (CP) protocol layers.
Figure 3 shows a high-level views of an exemplary 5G/NR network architecture.
Figure 4 shows a high-level illustration of dual connectivity (DC) in combination with carrier aggregation (CA).
Figures 5-6 show high-level views of exemplary network architectures that support multi-RAT DC (MR-DC) using EPC and 5GC, respectively.
Figures 7-8 show user plane (UP) radio protocol architectures from a UE perspective for EN-DC with EPC and MR-DC with 5GC, respectively.
Figures 9-10 show UP radio protocol architectures from a network perspective for EN-DC with EPC and MR-DC with 5GC, respectively.
Figure 11 is a block diagram showing a high-level comparison of CP architectures in LTE DC, EN-DC, and MR-DC using 5GC.
Figure 12 illustrates an exemplary PDCP duplication scheme.
Figure 13 shows an exemplary state transition diagram for NR SCells.
Figure 14 is an exemplary SCG state transition diagram.
Figures 15A-B show exemplary MAC control elements (CEs) for various buffer status reporting (BSR) formats.
Figures 16A-C show ASN.1 data structures for an exemplary *CellGroupConfig* IE and some of its constituent parts.
Figures 17-23 are signal flow diagrams of various procedures between a UE, a master node (MN), and a secondary node (SN), according to various embodiments of the present disclosure.
Figures 24A-B are a flow diagram of an exemplary method (e.g., procedure) for a UE, according to various embodiments of the present disclosure.
Figure 25 is a flow diagram of an exemplary method (e.g., procedure) for a second node configured to provide a UE's SCG, according to various embodiments of the present disclosure. These embodiments are however not covered by the claims.
Figure 26 is a flow diagram of an exemplary method (e.g., procedure) for a first node configured to provide a UE's MCG, according to various embodiments of the present disclosure.
Figure 27 illustrates an embodiment of a wireless network.
Figure 28 illustrates an embodiment of a UE.
Figure 29 is a block diagram illustrating an exemplary virtualization environment usable for implementation of various embodiments of network nodes in a wireless network.
Figures 30-31 are block diagrams of various communication systems and/or networks, according to various embodiments of the present disclosure.
Figures 32-35 are flow diagrams of exemplary methods (e.g., procedures) for transmission and/or reception of user data, according to various embodiments of the present disclosure.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, *etc.* are to be interpreted openly as referring to at least one instance of the element, apparatus, component, means, step, *etc.,* unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Furthermore, the following terms are used throughout the description given below:
- Radio Node: As used herein, a "radio node" can be either a "radio access node" or a "wireless device."
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station (*e.g.,* a New Radio (NR) base station (gNB/en-gNB) in a 3GPP Fifth Generation (5G) NR network or an enhanced or evolved Node B (eNB/ng-eNB) in a 3GPP LTE network), base station distributed components (*e.g.,* CU and DU), base station control- and/or user-plane components (e.g., CU-CP, CU-UP), a high-power or macro base station, a low-power base station (*e.g.,* micro, pico, femto, or home base station, or the like), an integrated access backhaul (IAB) node, a transmission point, a remote radio unit (RRU or RRH), and a relay node.
- Core Network Node: As used herein, a "core network node" is any type of node in a core network. Some examples of a core network node include, *e.g.,* a Mobility Management Entity (MME), a serving gateway (SGW), a Packet Data Network Gateway (P-GW), an access and mobility management function (AMF), a session management function (AMF), a user plane function (UPF), a Service Capability Exposure Function (SCEF), or the like.
- Wireless Device: As used herein, a "wireless device" (or "WD" for short) is any type of device that has access to (*i.e.,* is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, *etc.* Unless otherwise noted, the term "wireless device" is used interchangeably herein with the term "user equipment" (or "UE" for short).
- Network Node: As used herein, a "network node" is any node that is either part of the radio access network (*e.g.,* a radio access node or equivalent name discussed above) or of the core network (*e.g.,* a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g.,* administration) in the cellular communications network.

Note that the description herein focuses on a 3GPP cellular communications system and, as such, 3GPP terminology or terminology similar to 3GPP terminology is oftentimes used. However, the concepts disclosed herein are not limited to a 3GPP system. Furthermore, although the term "cell" is used herein, it should be understood that (particularly with respect to 5G NR) beams may be used instead of cells and, as such, concepts described herein apply equally to both cells and beams.

As briefly mentioned above, if a UE's SCG is deactivated (or, more generally, in a reduced-energy mode such as SCG suspended, SCG dormant, etc.), the UE may be unable to notify the network of arrival of UL data (e.g., from application layer and/or NAS) needing to be transmitted by the UE. This can cause various problems, issues, and/or difficulties related to SN awareness and scheduling of SCG resources for UL data transmission. This is discussed in more detail below, after the following description of NR network architecture and various dual connectivity (DC) arrangements.

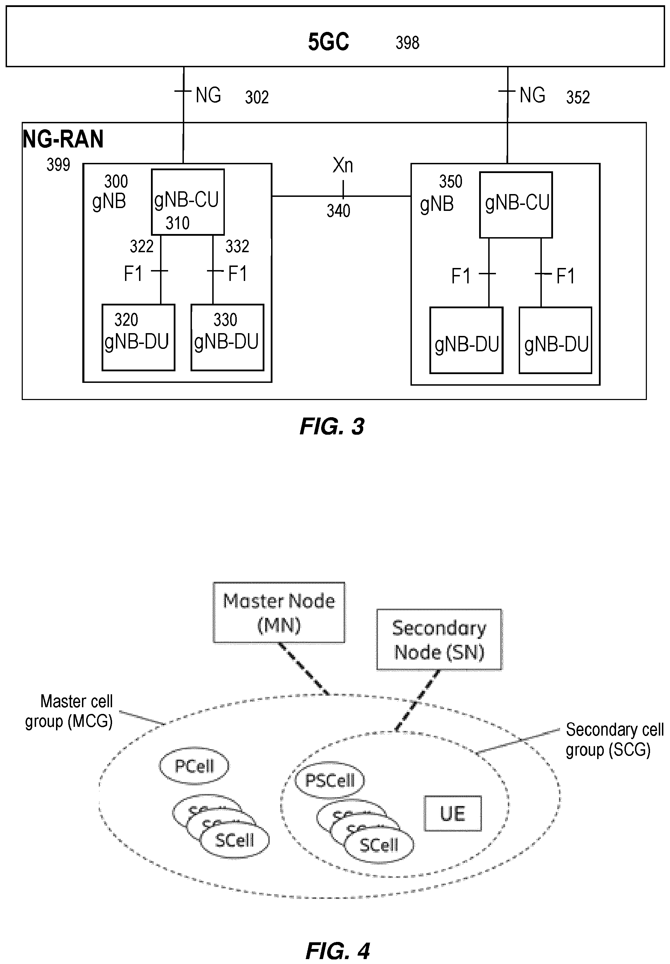

Figure 3 illustrates a high-level view of the 5G network architecture, consisting of a Next Generation RAN (NG-RAN) 399 and a 5G Core (5GC) 398. NG-RAN 399 can include a set of gNodeB's (gNBs) connected to the 3GC via one or more NG interfaces, such as gNBs 300, 350 connected via interfaces 302, 352, respectively. In addition, the gNBs can be connected to each other via one or more Xn interfaces, such as Xn interface 340 between gNBs 300 and 350. With respect the NR interface to UEs, each of the gNBs can support frequency division duplexing (FDD), time division duplexing (TDD), or a combination thereof.

NG-RAN 399 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB is connected to all 5GC nodes within an "AMF Region," with the term "AMF" being discussed more below.

The NG RAN logical nodes shown in Figure 3 include a central (or centralized) unit (CU or gNB-CU) and one or more distributed (or decentralized) units (DU or gNB-DU). For example, gNB 300 includes gNB-CU 310 and gNB-DUs 320 and 330. CUs *(e.g.,* gNB-CU 310) are logical nodes that host higher-layer protocols and perform various gNB functions such controlling the operation of DUs. Each DU is a logical node that hosts lower-layer protocols and can include, depending on the functional split, various subsets of the gNB functions. As such, each of the CUs and DUs can include various circuitry needed to perform their respective functions, including processing circuitry, transceiver circuitry (*e.g.,* for communication), and power supply circuitry. Moreover, the terms "central unit" and "centralized unit" are used interchangeably herein, as are the terms "distributed unit" and "decentralized unit."

A gNB-CU connects to gNB-DUs over respective F1 logical interfaces, such as interfaces 322 and 332 shown in Figure 3. The gNB-CU and connected gNB-DUs are only visible to other gNBs and the 5GC as a gNB. In other words, the F1 interface is not visible beyond gNB-CU. In the gNB split CU-DU architecture illustrated by Figure 3, DC can be achieved by allowing a UE to connect to multiple DUs served by the same CU or by allowing a UE to connect to multiple DUs served by different CUs.

3GPP TR 38.804 (v14.0.0) describes various exemplary DC scenarios or configurations in which the MN and SN can apply NR, LTE, or both. The following terminology is used to describe these exemplary DC scenarios or configurations:
- DC: LTE DC (*i.e.,* both MN and SN employ LTE, as discussed above);
- EN-DC: LTE-NR DC where MN (eNB) employs LTE and SN (gNB) employs NR, and both are connected to EPC.
- NGEN-DC: LTE-NR dual connectivity where a UE is connected to one ng-eNB that acts as a MN and one gNB that acts as a SN. The ng-eNB is connected to the 5GC and the gNB is connected to the ng-eNB via the Xn interface.
- NE-DC: LTE-NR dual connectivity where a UE is connected to one gNB that acts as a MN and one ng-eNB that acts as a SN. The gNB is connected to 5GC and the ng-eNB is connected to the gNB via the Xn interface.
- NR-DC (or NR-NR DC): both MN and SN employ NR.
- MR-DC (multi-RAT DC): a generalization of the Intra-E-UTRA Dual Connectivity (DC) described in 3GPP TS 36.300 (v16.3.0), where a multiple Rx/Tx UE may be configured to utilize resources provided by two different nodes connected via non-ideal backhaul, one providing E-UTRA access and the other one providing NR access. One node acts as the MN and the other as the SN. The MN and SN are connected via a network interface and at least the MN is connected to the core network. EN-DC, NE-DC, and NGEN-DC are different example cases of MR-DC.

Figure 4 shows a high-level illustration of DC in combination with carrier aggregation (CA). In this illustration, each of the MN and the SN can be either an eNB or a gNB, in accordance with the various DC scenarios described above. The MN provides the MCG consisting of a PCell and three SCells arranged in CA, while the SN provides the SCG consisting of a PSCell and three SCells arranged in CA.

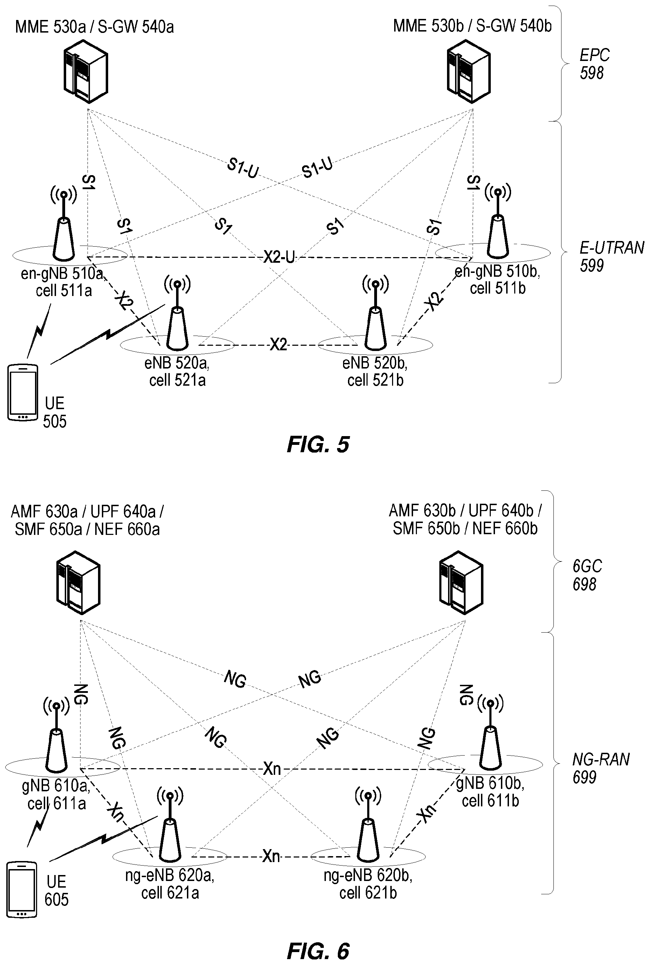

Figure 5 shows a high-level view of an exemplary network architecture that supports EN-DC, including an E-UTRAN 599 and an EPC 598. As shown in the figure, E-UTRAN 599 can include en-gNBs 510 *(e.g.,* 510a,b) and eNBs 520 *(e.g.,* 520a,b) that are interconnected with each other via respective X2 (or X2-U) interfaces. The eNBs can be similar to those shown in Figure 1, while the ng-eNBs can be similar to the gNBs shown in Figure 3 except that they connect to the EPC via an S1-U interface rather than to a 5GC via an X2 interface. The eNBs also connect to the EPC via an S1 interface, similar to the arrangement shown in Figure 1. More specifically, the en-gNBs and eNBs 520 connect to MMEs (*e.g.,* 530a,b) and S-GWs (e.g., 540a,b) in the EPC.

Each of the en-gNBs and eNBs can serve a geographic coverage area including one or more cells, including cells 511a-b and 521a-b shown as exemplary in Figure 5. Depending on the particular cell in which it is located, a UE 505 can communicate with the en-gNB or eNB serving that particular cell via the NR or LTE radio interface, respectively. In addition, the UE can be in EN-DC connectivity with a first cell served by an eNB and a second cell served by an en-gNB, such as cells 520a and 510a shown in Figure 5.

In addition to providing coverage via "cells," as in LTE, NR networks also provide coverage via "beams." In general, a DL "beam" is a coverage area of a network-transmitted RS that may be measured or monitored by a UE. In NR, for example, such RS can include any of the following, alone or in combination: SS/PBCH block (SSB), CSI-RS, tertiary reference signals (or any other sync signal), positioning RS (PRS), demodulation RS (DMRS), phase-tracking reference signals (PTRS), *etc.* In general, SSB is available to all UEs regardless of RRC state, while other RS (*e.g.,* CSI-RS, DM-RS, PTRS) are associated with specific UEs that have a network connection, *i.e.,* in RRC_CONNECTED state.

Figure 6 shows a high-level view of an exemplary network architecture that supports MR-DC configurations based on 5GC. More specifically, Figure 6 shows an NG-RAN 699 and a 5GC 698. NG-RAN 699 can include gNBs 610 *(e.g.,* 610a,b) and ng-eNBs 620 *(e.g.,* 620a,b) that are interconnected with each other via respective Xn interfaces. The gNBs and ng-eNBs are also connected via the NG interfaces to the 5GC, more specifically to the Access and Mobility Management Function (AMF, *e.g.,* 630a,b) via respective NG-C interfaces and to the User Plane Function (UPF, *e.g.,* 640a,b) via respective NG-U interfaces. Moreover, the AMFs can communicate with one or more session management functions (SMFs, e.g., 650a,b) and network exposure functions (NEFs, e.g., NEFs 660a,b).

Each of the gNBs can be similar to those shown in Figure 5, while each of the ng-eNBs can be similar to the eNBs shown in Figure 1 except that they connect to the 5GC via an NG interface rather than to EPC via an S1 interface. Each of the gNBs and ng-eNBs can serve a geographic coverage area including one or more cells, including cells 611a-b and 621a-b shown as exemplary in Figure 6. The gNBs and ng-eNBs can also use various directional beams to provide coverage in the respective cells. Depending on the particular cell in which it is located, a UE 605 can communicate with the gNB or ng-eNB serving that particular cell via the NR or LTE radio interface, respectively. In addition, the UE can be in MR-DC connectivity with a first cell served by an ng-eNB and a second cell served by a gNB, such as cells 620a and 610a shown in Figure 6.

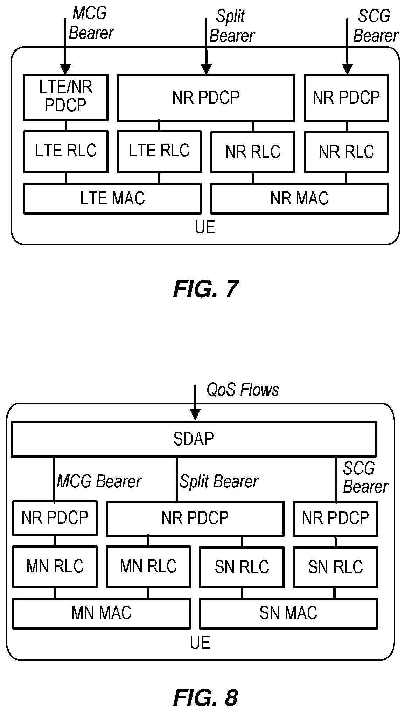

Figures 7-8 show UP radio protocol architectures from a UE perspective for MR-DC with EPC (e.g., EN-DC) and with 5GC (e.g., NGEN-DC, NE-DC, and NR-DC), respectively. In both cases, a UE supports MCG, SCG, and split bearers, as discussed above. In the EN-DC arrangement shown in Figure 7, MCG bearers have either LTE (e.g., E-UTRA) or NR PDCP and LTE RLC and MAC layers, while SCG bearers have NR PDCP, RLC, and MAC layers. Split bearers have NR PDCP layer and both LTE and NR RLC and MAC layers. In the arrangement shown in Figure 8, all bearers have NR PDCP layers and lower layers corresponding to the RAT used by the MN and SN. One difference between the architectures in Figures 7-8 is that the various bearers for MR-DC with 5GC are associated with QoS flows that are terminated in an SDAP layer above PDCP.

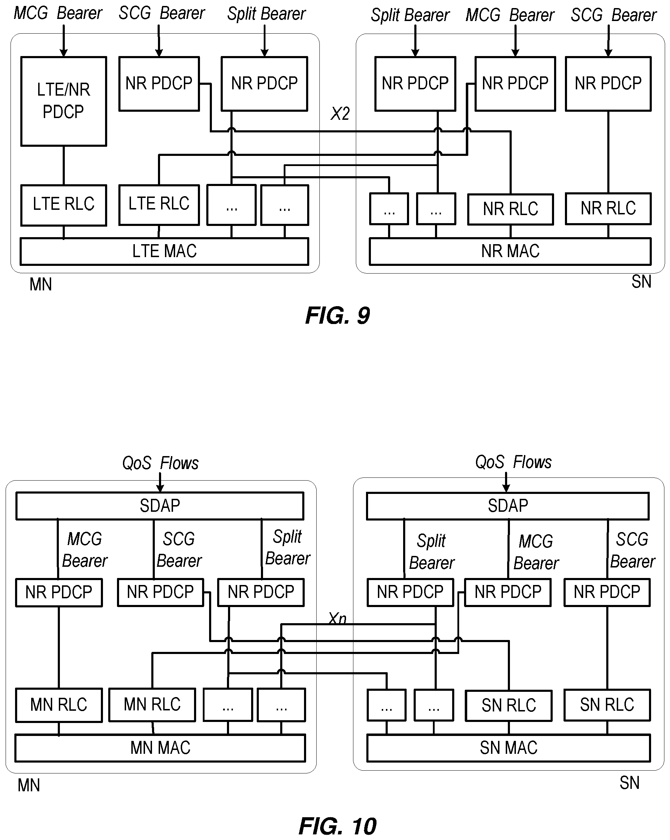

Figures 9-10 show UP radio protocol architectures from a network perspective for MR-DC with EPC (e.g., EN-DC) and with 5GC (e.g., NGEN-DC, NE-DC, and NR-DC), respectively. In the EN-DC arrangement shown in Figure 9, an MCG bearer terminated in MN has PDCP layer of the RAT used by the MN, while all other bearers have NR PDCP layer. All bearers have lower layers associated with the RAT of the node(s) in which they are terminated. In the arrangement shown in Figure 10, all bearers have NR PDCP layers and lower layers associated with the RAT of the node(s) in which they are terminated. From a network perspective, each MCG, SCG, or and split bearer can be terminated either in MN or in SN. For example, the X2 or Xn interface between the nodes will carry traffic for SCG or split bearers terminated in MN PDCP layer to lower layers in SN. Likewise, X2 or Xn will carry traffic for MCG or split bearers terminated in SN PDCP layer to lower layers in MN. One difference between the architectures in Figures 9-10 is that the various bearers for MR-DC with 5GC are associated with QoS flows that are terminated at SDAP.

Figures 9-10 also have some DC-specific variations. In EN-DC with EPC, the network can configure either LTE PDCP or NR PDCP for MN-terminated MCG data radio bearers (DRBs) while NR PDCP is used for all other DRBs. In MR-DC with 5GC, NR PDCP is always used for all DRB types. In NGEN-DC, LTE RLC/MAC is used in the MN while NR RLC/MAC is used in the SN. In NE-DC, NR RLC/MAC is used in the MN while LTE RLC/MAC is used in the SN. In NR-DC, NR RLC/MAC is used in both MN and SN.

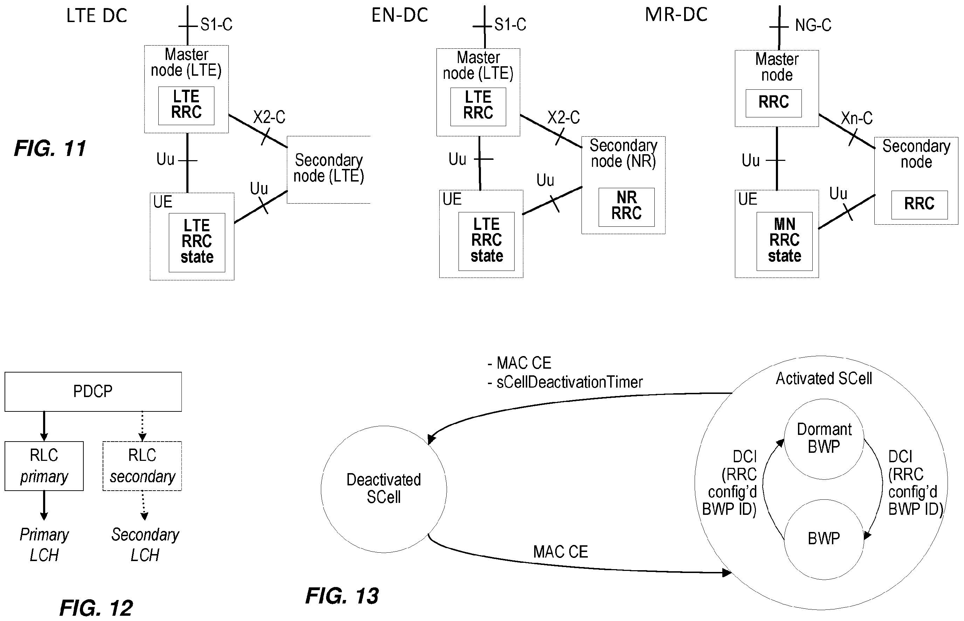

Figure 11 is a block diagram showing a high-level comparison of CP architectures in LTE DC, EN-DC, and MR-DC using 5GC. One primary difference is that the SN has a separate NR RRC entity in EN-DC and MR-DC. This means that the SN can also control the UE, sometimes without the knowledge of the MN but often in coordination with the MN. In LTE-DC, the RRC decisions are always made by the MN (MN to UE). Even so, the LTE-DC SN still decides its own configuration because it is aware of its resources, capabilities etc. while the MN is not.

Another difference between LTE-DC and the others is the use of a split bearer for RRC. Split RRC messages are mainly used for creating diversity, and the sender can choose one of the links for scheduling the RRC messages, or it can duplicate the message over both links. In the DL, the path switching between the MCG or SCG legs (or duplication on both) is left to network implementation. On the other hand, for the UL, the network configures the UE to use the MCG, SCG, or both for RRC messages. The terms "leg", "path" and "RLC bearer" are used interchangeably throughout this document.

Packet duplication (also referred to as "PDCP duplication" or "PDCP PDU duplication") can increase reliability and reduce latency, which can be very beneficial for ultra-reliable low latency (URLLC) data services. When PDCP duplication is configured for a radio bearer by RRC, an additional RLC entity and an additional logical channel are added to the radio bearer to handle the duplicated PDCP protocol data units (PDUs). As such, PDCP duplication involves sending the same PDCP PDUs twice: once on the original (or primary) RLC entity and a second time on the additional (or secondary) RLC entity.

Figure 12 illustrates an exemplary PDCP duplication scheme. Note that the primary RLC entity is associated with a primary logical channel (LCH) and the secondary RLC entity is associated with a secondary LCH. When configuring duplication for a DRB, RRC also sets the state of PDCP duplication (i.e., activated or deactivated) at the time of (re-)configuration. After the configuration, the PDCP duplication state can then be dynamically controlled by a MAC CE. In DC, the UE applies these MAC CE commands regardless of whether they were received via MCG or SCG.

3GPP previously specified the concepts of dormant LTE SCell and dormancy-like behavior of an NR SCell. In LTE, when an SCell is in dormant state, the UE does not need to monitor the corresponding physical downlink control channel (PDCCH) or physical downlink shared channel (PDSCH) and cannot transmit in the corresponding UL. This behavior is similar to behavior in a deactivated state, but the UE is also required to perform and report CQI measurements, which is different from deactivated state behavior. A PUCCH SCell (SCell configured with PUCCH) cannot be in dormant state.

In NR, dormancy-like behavior for SCells is based on the concept of dormant bandwidth parts (BWP). One of the UE's dedicated BWPs configured via RRC signaling can be configured as dormant for an SCell. If the active BWP of the activated SCell is a dormant BWP, the UE stops monitoring PDCCH on the SCell but continues performing CSI measurements, AGC, and beam management (if configured to do so). Downlink control information (DCI) on PDCCH is used to control entering/leaving the dormant BWP for SCell(s) or SCG(s) and is sent to the SpCell of the cell group that includes the dormant SCell (i.e., to PCell if SCell belongs to MCG, to PSCell if SCell belongs to SCG). The SpCell (i.e., PCell or PSCell) and PUCCH SCell cannot be configured with a dormant BWP.

Figure 13 is an exemplary state transition diagram for NR SCells. At a high level, a UE's SCell can transition between deactivated and activated states based on explicit commands from the network (e.g., MAC CEs) or expiration of a deactivation timer. Within the activated state, a particular BWP can transition between active and dormant conditions based on DCI received from the network.

However, if the UE is configured with MR-DC, it cannot fully benefit from the energy reductions of dormant state or dormancy-like behavior since the PSCell cannot be configured to be dormant. Instead, an existing solution could be releasing (for power savings) and adding (when traffic demands require) the SCG on an as-needed basis. Traffic is likely to be bursty, however, so adding and releasing the SCG as needed can involve a significant amount of RRC signaling and inter-node messaging between the MN and the SN. This can cause considerable delay.

In the context of 3GPP Rel-16, there were some discussions about placing the PSCell in dormancy, also referred to as *SCG Suspension.* Some agreed principles of this solution include:
- The UE supports network-controlled suspension of the SCG in RRC_CONNECTED.
- UE behavior for a suspended SCG is for further study (FFS)
- The UE supports at most one SCG configuration, suspended or not suspended, in Rel16.
- In RRC_CONNECTED upon addition of the SCG, the SCG can be either suspended or not suspended by configuration.

More detailed solutions were proposed for Rel-16, but these have various problems. For example, one solution proposed that a gNB can indicate for a UE to suspend SCG transmissions when no data traffic is expected to be sent in SCG, so that UE keeps the SCG configuration but does not use it for power saving purposes. Signaling to suspend SCG could be based on DCI/MAC-CE/RRC, but no details were discussed above the particular configuration from the gNB to the UE. Even so, this solution for SCells may not be applicable to PSCells, which may be associated with a different network node (e.g., a gNB operating as SN).

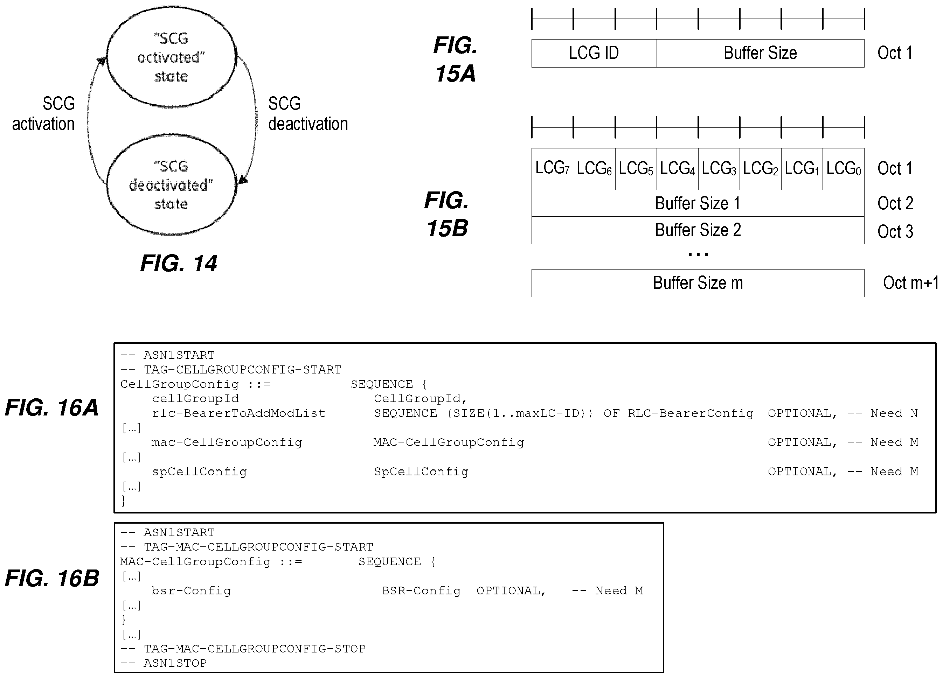

Discussions are ongoing in 3GPP RAN1, RAN2, and RAN3 WGs about solutions for the Rel-17 MR-DC work item objective "Support efficient activation/de-activation mechanism for one SCG and SCells". One concept being discussed is a "deactivated SCG" with reduced energy consumption when traffic demands are dynamically reduced. Figure 14 is an exemplary state transition diagram illustrating two SCG states (sometimes referred to as "states for SCG activation") according to this concept. In Figure 14, these states are labelled "SCG deactivated state" and "SCG activated state" and are distinct from RRC states. Rather, these SCG states represent whether or not an SCG energy saving mode has been applied.

Current RAN2 assumption is that in "SCG deactivated state", the UE does not perform PDCCH monitoring of the PSCell in order to reduce energy consumption. This also means UL/DL data transmission in the SCG is suspended in SCG deactivated state. Activation and deactivation of the SCG is typically controlled by the network (e.g., by MN via RRC signaling). Moreover, RAN2 has agreed that PSCell mobility is supported while the SCG is deactivated, even if details are FFS. When the UE is configured with an SCG in "SCG activated state", these energy-reduction features are not used/applied.

The MAC layer in the network includes dynamic resource schedulers that allocate DL and UL PHY resources. UL scheduling is based on a UE transmitting scheduling requests (SRs) and measurement reports including buffer status reports (BSRs) and power headroom reports (PHRs). More details about NR UL scheduling are given in 3GPP TS 38.300 and 38.321.

The network schedules UL data transmissions in a cell by dynamically or semi-statically allocating radio resources to UEs. These radio resources are provided to the UE in dynamic UL grants via PDCCH or in a Random Access Response (RAR), or as configured (i.e., persistent) UL grants via RRC signaling (optionally with grant activation/deactivation by DCI). An UL grant includes a resource allocation (e.g., in time/frequency) for transmission and other instructions on how to transmit the data on PUSCH.

UL BSRs (or more simply, BSRs) are needed for QoS-aware packet scheduling. In NR, BSRs indicate data volume buffered in the UE for each logical channel group (LCG). Relative to SRs, BSRs speed up scheduling by informing the network of the amount of UL data the UE has pending. Based on the received BSRs, the network may then provide UL grants to accommodate transmission of all data in the UE buffer without having to wait for further UE SRs. When a BSR is triggered (e.g., by arrival of new UL data) and no resources are available to transmit the BSR, the UE can transmit a SR to obtain an UL grant for the BSR. If the UE has no valid PUCCH resources to transmit the SR (e.g., due to expiration of time alignment timer), the UE initiates random access to establish UL synchronization and receive the UL grant needed for the BSR.

In NR, the RRC layer configures the following parameters to control UE BSRs:
- *periodicBSR-Timer,* per MAC entity configuration in *BSR-Config* (effectively optional);
- *retxBSR-Timer,* per MAC entity configuration in *BSR-Config* (mandatory);
- *logicalChannelSR-DelayTimerApplied,* per logical channel configuration (optional);
- *logicalChannelSR-DelayTimer,* per MAC entity configuration in *BSR-Config;*
- *logicalChannelSR Mask,* per logical channel configuration;
- *logicalChannelGroup,* per logical channel configuration (optional).
Each logical channel (LCH) may be allocated to an LCG using the *logicalChannelGroup.* The maximum number of LCGs is eight. The MAC entity determines the amount of UL data available for a logical channel according to the data volume calculation procedure specified in 3GPP TS 38.322 and 38.323.

In general, the following conditions can trigger a UE BSR:
1. Data arrives for a logical channel which belongs to a LCG and if
   - no data is available on any of the logical channels belonging to any other LCG's or
   - data is available only for the logical channels belonging to the lower priority LCG.
2. Upon *retxBSR-Timer* expiry and UE has data available for transmission for any of the logical channels which belong to an LCG.
3. Number of padding bits after UL grant is allocated is equal to or larger than the size of the Buffer Status Report MAC CE and its subheader.
4. Upon expiration of *periodicBSR-Timer.*

A BSR triggered in the conditions 1-2 is referred as Regular BSR, a BSR triggered by condition 3 is referred as Padding BSR., and a BSR triggered by condition 4 is referred as Periodic BSR. Buffer status reporting is performed by the UE MAC layer using different types of MAC CEs, including the following:
- Short BSR format (fixed size);
- Long BSR format (variable size);
- Short Truncated BSR format (fixed size); or
- Long Truncated BSR format (variable size).

Figure 15A shows an exemplary MAC CE according to the Short BSR and Short Truncated BSR formats, while Figure 15B shows an exemplary MAC CE according to the Long BSR and Long Truncated BSR formats. The BSR formats are identified by MAC sub-headers with Logical Channel Identifiers (LCIDs). In NR, the LCID 59 indicates Short Truncated BSR, LCID 60 indicates Long Truncated BSR, LCID 61 indicates Short BSR, and LCID 62 indicates Long BSR Fields shown in Figures 15A-B are defined as follows:
- LCG ID: The Logical Channel Group ID field identifies the group of logical channel(s) whose buffer status is being reported. The length of the field is 3 bits;
- LCGᵢ: For the Long BSR format and Pre-emptive BSR format, this field indicates the presence of the Buffer Size field for the logical channel group i. The LCGᵢ field set to 1 indicates that the Buffer Size field for the logical channel group i is reported. The LCGᵢ field set to 0 indicates that the Buffer Size field for the logical channel group i is not reported. For the Long Truncated BSR format, this field indicates whether logical channel group i has data available. The LCGᵢ field set to 1 indicates that logical channel group i has data available. The LCGᵢ field set to 0 indicates that logical channel group i does not have data available;
- Buffer Size i: The Buffer Size field identifies the total amount of data across all logical channels of logical channel group i after the MAC PDU has been built (i.e., after the logical channel prioritization procedure, which may result the value of the Buffer Size field to zero). The amount of data is indicated in number of bytes. The size of the RLC and MAC headers are not considered in the buffer size computation. The length of this field for the Short BSR format and the Short Truncated BSR format is 5 bits. The length of this field for the Long BSR format and the Long Truncated BSR format is 8 bits.

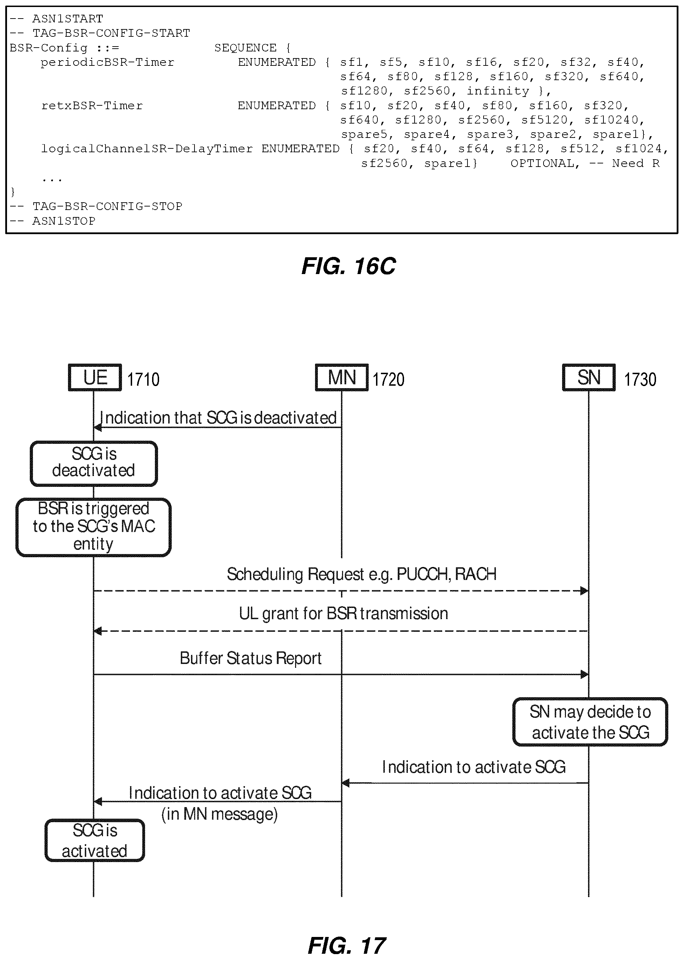

The procedure for UE BSR reporting is further defined in 3GPP TS 38.321 (v16.2.0) section 5.4.5. Additionally, UE BSR reporting is configured via RRC using the *BSR-Config* IE. In particular, BSR-Config is included in a *MAC-CellGroupConfig* IE, which is included in a *CellGroupConfig* IE. The *CellGroupConfig* IE is used to configure a master cell group (MCG) or secondary cell group (SCG). A cell group comprises of one MAC entity, a set of logical channels with associated RLC entities and of a primary cell (SpCell) and one or more secondary cells (SCells). The *MAC-CellGroupConfig* IE is used to configure MAC parameters for a cell group, including DRX. Figures 16A-C show ASN.1 data structures for exemplary *CellGroupConfig, MAC-CellGroupConfig,* and *BSR-Config* IEs, respectively.

The value of the buffer size field reported for an LCG in a BSR is determined by summing results of data volume calculations for each LCH of the LCG. The NR PDCP layer data volume calculation procedure is given by the following procedural text from 3GPP TS 38.323 (v16.2.0):
*** Begin text from 3GPP TS 38.323 ***
   For the purpose of MAC buffer status reporting, the transmitting PDCP entity shall consider the following as PDCP data volume:
      - the PDCP SDUs for which no PDCP Data PDUs have been constructed;
      - the PDCP Data PDUs that have not been submitted to lower layers;
      - the PDCP Control PDUs;
      - for AM DRBs, the PDCP SDUs to be retransmitted according to clause 5.1.2 in 3GPP TS 38.323;
      - for AM DRBs, the PDCP Data PDUs to be retransmitted according to clause 5.5 in 3GPP TS 38.323.
   If the transmitting PDCP entity is associated with at least two RLC entities, when indicating the PDCP data volume to a MAC entity for BSR triggering and Buffer Size calculation (as specified in TS 38.321 and TS 36.321), the transmitting PDCP entity shall:
      - if the PDCP duplication is activated for the RB:
         ∘ indicate the PDCP data volume to the MAC entity associated with the primary RLC entity;
         ∘ indicate the PDCP data volume excluding the PDCP Control PDU to the MAC entity associated with the RLC entity other than the primary RLC entity activated for PDCP duplication;
         ∘ indicate the PDCP data volume as 0 to the MAC entity associated with RLC entity deactivated for PDCP duplication;
      - else (i.e., the PDCP duplication is deactivated for the RB):
         ∘ if the split secondary RLC entity is configured; and
         ∘ if the total amount of PDCP data volume and RLC data volume pending for initial transmission (as specified in TS 38.322) in the primary RLC entity and the split secondary RLC entity is equal to or larger than ul-DataSplitThreshold:
            ▪ indicate the PDCP data volume to both the MAC entity associated with the primary RLC entity and the MAC entity associated with the split secondary RLC entity;
            ▪ indicate the PDCP data volume as 0 to the MAC entity associated with RLC entity other than the primary RLC entity and the split secondary RLC entity;
         ∘ else, if the transmitting PDCP entity is associated with the DAPS bearer:
            ▪ if the uplink data switching has not been requested, indicate the PDCP data volume to the MAC entity associated with the source cell;
            ▪ else:
               ▪ indicate the PDCP data volume excluding the PDCP Control PDU for interspersed ROHC feedback associated with the source cell to the MAC entity associated with the target cell;
               ▪ indicate the PDCP data volume of PDCP Control PDU for interspersed ROHC feedback associated with the source cell to the MAC entity associated with the source cell;
         ∘ else:
            ▪ indicate the PDCP data volume to the MAC entity associated with the primary RLC entity;
            ▪ indicate the PDCP data volume as 0 to the MAC entity associated with the RLC entity other than the primary RLC entity.
*** End text from 3GPP TS 38.323 ***
   Similarly, the NR RLC layer data volume calculation procedure is specified in 3GPP TS 38.322 (v16.2.0) as follows:
*** Begin text from 3GPP TS 38.322 ***
   For the purpose of MAC buffer status reporting, the UE shall consider the following as RLC data volume:
      ▪ RLC SDUs and RLC SDU segments that have not yet been included in an RLC data PDU;
      ▪ RLC data PDUs that are pending for initial transmission;
      ▪ RLC data PDUs that are pending for retransmission (RLC AM).
   In addition, if a STATUS PDU has been triggered and *t-StatusProhibit* is not running or has expired, the UE shall estimate the size of the STATUS PDU that will be transmitted in the next transmission opportunity and consider this as part of RLC data volume.
*** End text from 3GPP TS 38.322 ***

Power headroom reports (PHRs) are used for transmit-power-aware packet scheduling. In NR, three types of reporting are supported: a first one for PUSCH transmission, a second one for PUSCH and PUCCH transmission in an LTE Cell Group in EN-DC, and a third one for SRS transmission on SCells configured with SRS only. In case of CA, when no transmission takes place on an activated SCell, a reference power is used to provide a virtual report. PHRs are transmitted using MAC CEs.

To summarize, upon arrival of UL data (e.g., from application layer) associated with a radio bearer (e.g., DRB), a UE triggers a BSR that includes the amount of data volume calculated in the manner discussed above and indicates an LCID or an LCG ID. Based on this information, the network can provide enough resources for the UL data transmission. There are different rules determining whether the UE transmits BSR to the MCG MAC entity, SCG MAC entity, or both MAC entities. These rules depend generally on the data volume calculated, a data volume threshold, and which cell group is configured as the primary path.

However, SCG transmissions and receptions are supposed to be suspended when the UE is configured with a deactivated SCG, which is being standardized in Rel-17 as a way to reduce UE energy consumption in response to dynamic reductions in data traffic. Since BSRs are among SCG transmissions to be suspended, it is unclear how the UE should report the arrival of UL data (and data volume) associated with an SCG bearer or a split bearer to the network. In this situation, it is also unclear how scheduling should work on SCG and/or MCG relative to conventional techniques in which both MCG and SCG MAC entities may be aware of data volumes due to BSR via MCG and/or SCG (as discussed above).

Accordingly, embodiments of the present disclosure provide novel, flexible, and efficient techniques for a UE configured for MR-DC with an MCG and an SCG in a wireless network (e.g., NG-RAN). When the SCG is deactivated, the UE can report UL data needing to be transmitted via the SCG in a message to the network, e.g., via MCG or SCG. According to the invention, said message is transmitted via the MCG. In the following, the examples in which the message is transmitted in some other way are not covered by the claims but are useful for understanding the invention. The UE can send the report in a MAC CE (e.g., BSR) or an RRC message. According to the invention, if the SCG is in deactivated state, said report is transmitted in an RRC *UEAssistancelnformation* message. In the following, the examples in which the report is transmitted in some other way when the SCG is in deactivated state are not covered by the claims but are useful for understanding the invention.

In various embodiments, the UE can determine that UL data needing to be transmitted on a DRB associated with the SCG becomes available. The UE can determine the SCG state, such as SCG deactivated state or SCG activated state. Based on the determined SCG state, the DRB type associated with the available UL data, and/or the available UL data volume, the UE can determine a method for calculating the UL data volume and/or a procedure for reporting the calculated UL data volume to the network. In some variants, when reporting the UL data volume via the SCG, both UE and network can consider the SCG as activated.

In various embodiments, the network can receive a BSR from a UE and, based on the BSR contents, determine to activate a deactivated SCG. For example, a MN receiving a BSR from a UE can forward the BSR to the SN upon certain conditions, such as when the SCG is deactivated. This forwarding enables the SN to be aware of available UL data available at the UE, which can be associated with SCG bearers and/or SN-terminated split bearers. In response, the SN can determine to activate a deactivated SCG and indicate this activated status to the MN (e.g., in response to the forwarded UE BSR).

Embodiments can provide various benefits, advantages, and/or solutions to problems described herein. For example, embodiments a UE's SN to be aware that the UE's deactivated SCG has available UL data associated with an SCG bearer and/or a split bearer. This allows the SN to timely activate the deactivated SCG, thereby avoiding delays in receiving the available UL data. By avoiding such delays, performance of UE applications generating available UL data can be improved, which ultimately improves user experience.

In the following discussion, the terms "suspended SCG", "deactivated SCG", "inactive SCG", and "SCG in reduced-energy mode" are used interchangeably. From the UE perspective, however, "SCG in reduced-energy mode" means that the UE is operating in a reduced-energy mode with respect to the SCG. Likewise, the terms "resumed SCG", "activated SCG", "active SCG", "SCG in normal energy mode", "normal SCG operation", and "legacy SCG operation" are used interchangeably. From the UE perspective, "SCG in normal energy mode" means that the UE is operating in a normal (i.e., non-reduced) energy mode with respect to the SCG. Examples of operations are UE signal reception/transmission procedures e.g., RRM measurements, reception of signals, transmission of signals, measurement configuration, measurement reporting, evaluation of triggered event measurement reports, etc.

In the following, embodiments are described in terms of an SCG that is suspended for a UE configured with DC. However, similar principles can be applied to an MCG that is suspended for a UE configured with DC.

In the following, the terms "buffer status report" and "BSR" refer to an indication from a UE to a network about available UL data volume at the UE. This includes a BSR transmitted via a MAC CE based on a UL grant received from the network. This also includes the case when there is no UL grant for the transmission of the BSR, such that a UE must obtain an UL grant by transmitting an SR on a valid PUCCH resource or by initiating a random-access procedure without a valid PUCCH resource.

In the following, the terms "buffer status report" and "BSR" are used generically to encompass all species of BSR, including Short BSR, Short Truncated BSR, Long BSR, and Long Truncated BSR. For example, if more than one LCG has UL data available for transmission when a MAC PDU containing the BSR is built in the SCG MAC, the UE can transmit a Long BSR for all LCGs that have available UL data. Otherwise, if only one LCG has UL data available, the UE can transmit a Short BSR reporting the available UL data volume for that LCG. Further selection of regular or truncated formats can also be performed.

In the following, various embodiments are described in the context of "groups", e.g., "first group", "second group", etc. However, skilled persons will recognize that these groups are not mutually exclusive and that features described as being part of one group of embodiments can also be part of one or more other groups of embodiments.

In a first group of embodiments, a UE determines availability of UL data that should trigger a BSR in the SCG. The UE PDCP and RLC layers calculates the available UL data volume for the SCG. Subsequently, the UE creates and transmits a BSR in the SCG indicating the available UL data volume for the SCG. In this first group, the UE transmits the BSR even if the SCG is deactivated. This typically requires the UE to maintain time alignment in the PSCell.

In one alternative, the UE sends an SR if needed to obtain a valid UL grant that allows it to transmit the BSR. In another alternative, the UE can be configured with semi-static UL grants (e.g., configured grants) for BSR transmission even in an SCG deactivated state. After BSR transmission, the UE maintains the SCG state (activated or deactivated) before the BSR transmission unless the network changes the SCG state, e.g., via an RRCReconfiguration message or a MAC CE. In a variant, if the SCG was deactivated before the BSR transmission, the UE considers the SCG to be temporary activated to transmit the BSR, after which the UE again considers the SCG to be deactivated.

When there is available UL data while the SCG is deactivated, the UE PDCP layer indicates UL data volume to the UE MCG and/or SCG MAC entities according to a set of pre-defined rules that consider the type of bearer associated with the available UL data, the available UL data volume relative to a threshold, whether MCG and/or SCG have been configured as primary path, whether PDCP duplication is configured, etc.

When BSR is triggered at the SCG MAC entity (e.g., according to pre-defined and/or configured rules), the SCG MAC entity can transmit the BSR to the SN without necessarily activating the SCG. That can be done, for example, by the UE requesting UL data transmission in the deactivated SCG (e.g., in the PSCell) by sending an SR on PUCCH or by random access if the SCG MAC entity has no valid PUCCH resource configured for the SR. In one variant, regardless of whether the SCG is activated or deactivated, the SCG MAC entity uses the same rules to trigger BSR and the same procedure and configured parameters for SR and initial random access (if needed).

In other words, when the SCG's MAC entity is deactivated, the BSR state variables associated remains the same. These include timer value for periodic BSR if running (e.g., *periodicBSR-*T*imer*), value of the retransmission BSR timer (e.g., *retxBSR*-*Timer*), *logicalChannelSR-DelayTimerApplied,* and *logicalChannelSR-DelayTimer.* Thus, if any of these timers are running, they are not stopped when the SCG is deactivated. This simplifies behavior of SCG MAC entity while the SCG is deactivated.

Benefits of the first group include lower complexity and that the SCG does not need to be activated only to transmit BSR. In addition, the PDCP layer (e.g., for a given bearer having an associated SCG) does not need to be aware that the SCG (or another cell group) associated with a bearer has been deactivated. In addition, the SCG MAC entity can maintain BSR behavior while the SCG is deactivated. This means that the UE does not transition the SCG to an activated state just because it needs to transmit BSR and for that it needs to perform SR and read PDCCH to get an UL grant for BSR transmission.

In case SCG was deactivated when the network (e.g., MN) receives the BSR, it would be up to the network to decide whether to perform SCG activation. Figure 17 is a signal flow diagram between UE, MN, and SN that illustrates a first option according to certain embodiments. Initially, the UE receives from the MN an indication that the SCG is deactivated and deactivates the SCG accordingly. Subsequently, a BSR is triggered for the SCG MAC entity. If needed to get a valid UL grant to transmit the BSR, the UE sends a SR to the SN and receives the UL grant in response. The UE maintains the SCG in deactivated state while transmitting the BSR to the SN. When the SN receives the BSR, it determines to transition the SCG to activated state and indicates to the MN (e.g., via Xn interface signaling) that the SCG should be activated. Subsequently, the MN can indicate SCG activation to the UE, which activates the SCG accordingly.

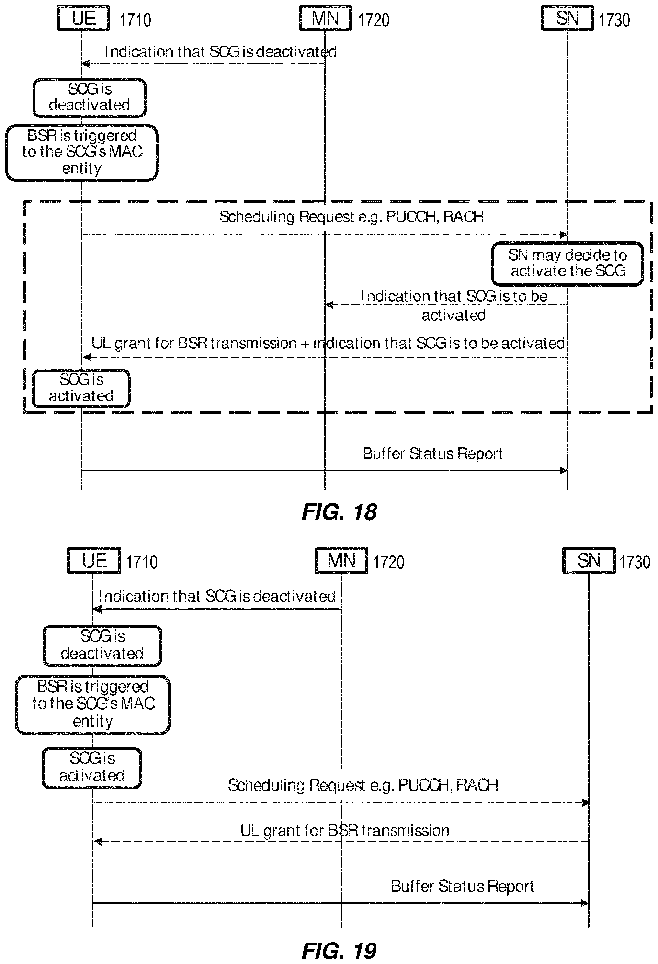

Figure 18 is a signal flow diagram between UE, MN, and SN that illustrates a second option according to certain embodiments. Several operations in Figure 18 are identical to corresponding operations in Figure 17; for brevity, these are not described. When the SN receives the UE's SR, it decides to activate the SCG and includes an indication of that with the UL grant responsive to the SR (e.g., MAC CE including an indication that the SCG is to be activated). The UE activates the SCG accordingly upon receipt of this indication. If this indication is not included with the UL grant, the SCG remains deactivated. In addition, the SN can send an indication of the SCG activation to the MN.

In the first group, a BSR can be triggered at the UE's SCG MAC entity while the SCG is deactivated by any of the following events:
- UL data, for a logical channel which belongs to an LCG, becomes available to the MAC entity; and either
   ∘ this UL data belongs to a logical channel with higher priority than the priority of any logical channel containing available UL data which belong to any LCG, or
   ∘ none of the logical channels which belong to an LCG contains any available UL data, in which case the BSR is a "'Regular BSR";
- UL resources are allocated and the number of padding bits is equal to or larger than the size of the BSR MAC CE plus its subheader, in which case the BSR is a "Padding BSR";
- *retxBSR-Timer* expires and at least one of the logical channels which belong to an LCG contains UL data, in which case the BSR is a "'Regular BSR"; and
- *periodicBSR-Timer* expires, in which case the BSR is a "Regular BSR".

In a second group of embodiments, a UE determines availability of UL data that should trigger a BSR in the SCG. The UE PDCP and RLC layers calculates the available UL data volume for the SCG. Subsequently, the UE determines the current SCG state, i.e., activated or deactivated. When the current SCG state is deactivated, the UE activates the SCG. In two alternatives, upon triggering a BSR, the SCG activation can be performed by the MAC layer by either initiating a random access procedure in the SCG or transmitting a SR in the SCG.

When the current SCG state is activated (including by UE activation, above), the UE creates and transmits a BSR in the SCG indicating the available UL data volume for the SCG. After BSR transmission, the UE considers the SCG to be activated and keeps the SCG activated unless the network explicitly deactivates it, such as by sending the UE an RRC message (e.g., *RRCReconfiguration*) or a MAC CE indicating SCG deactivation.

Figure 19 is a signal flow diagram between UE, MN, and SN that illustrates certain embodiments of the second group. A primary difference from the first group is that the UE activates the SCG before sending BSR (and optionally, before SR) rather than after SR (Figure 18) or after BSR (Figure 17). Other behavior can be substantially similar to the first group.

When there is available UL data while the SCG is deactivated, the UE PDCP layer indicates UL data volume to the UE MCG and/or SCG MAC entities according to a set of pre-defined rules that consider the type of bearer associated with the available UL data, the available UL data volume relative to a threshold, whether MCG and/or SCG have been configured as primary path, whether PDCP duplication is configured, etc.

In various embodiments, the data volume threshold for reporting via SCG can be the same or different for a deactivated SCG and an activated SCG. One possible advantage of defining a different threshold could be the network only wants BSR for deactivated SCG when there is a significant amount of data. In such case, the threshold can be set higher to transmit BSR in deactivated state than in activated state.

In some embodiments, only a configurable subset of LCHs (and/or LCGs) can trigger a SR when the SCG is deactivated. For example, the traffic associated with this subset can be delay intolerant (e.g., URLLC), while the traffic in the remaining LCHs (and/or LCGs) can be delay tolerant (e.g., UE application layer logging messages, application layer software updates, etc.). For this configuration, an additional parameter be added to the existing RRC *LogicalChannelConfig* IE, such as an optional *sr-AllowedInDeactivated* field with an enumerated value of "true" indicating SR allowed for the LCH when the SCG is deactivated. If the *srAllowedInDeactivated* field is not present, then SR is not allowed for the LCH when the SCG is deactivated. This operation can also be specified by the following procedural statements, which can be part of a relevant 3GPP specification:
*** Begin proposed 3GPP specification text ***
   2>if a Regular BSR has been triggered and *logicalChannelSR-DelayTimer* is not running:
   3> if the MAC entity is de-activated and if the Regular BSR was triggered for a logical channel for which *sr-AllowedInDeactivated* is configured;
   4> trigger a Scheduling Request
*** End proposed 3GPP specification text ***

One benefit of the second group is reduced complexity since the SCG will always be activated when the UE performs UL transmissions. For example, the UE can monitor PDCCH for UL grants to transmit BSR and any UL grants for BSR retransmission in case the initial BSR transmission cannot be correctly decoded by the network. This could be interpreted as an UL triggered activation and/or a request for UL triggered activation.

In a variant of the procedure shown in Figure 19, arrival of UL data for transmission (e.g., BSR for LCGs associated with the SCG) triggers the UE to send an SCG activation request message (e.g., *RRCActivationRequest,* MAC CE indicating a request for SCG activation, etc.) to the network. The UE waits for a response from the network before it can consider the SCG as activated. Upon receiving the response, the UE can transmit a SR for UL data in the manner shown in Figure 19.

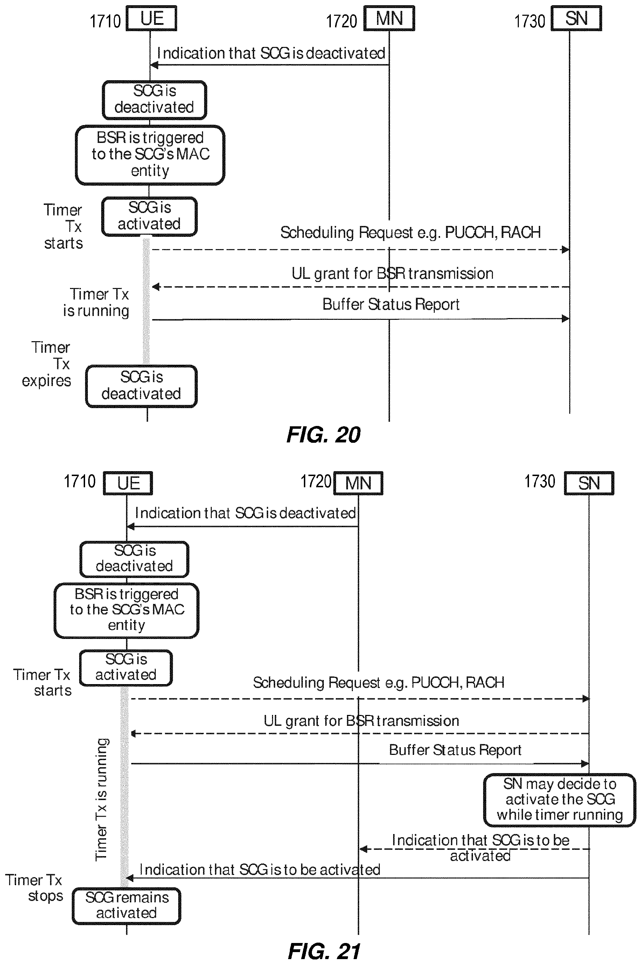

Figure 20 is a signal flow diagram between UE, MN, and SN that illustrates other embodiments of the second group. A primary difference from Figure 19 is that upon activating the SCG in response to the triggering BSR, the UE initiates a timer. The timer duration can be configured as part of the BSR configuration and/or provided in the message indication that the SCG is to be deactivated. While the timer is running the UE considers the SCG as activated, and upon the timer expiration the UE considers the SCG deactivated. While the timer is running, the UE monitors the activated SCG's PDCCH (e.g., the PSCell's PDCCH, CORESET, and/or any other DL control channel resources), which provides the SN an opportunity to schedule DL transmissions to the UE. Two variants of this approach are described below.

Figure 21 is a signal flow diagram between UE, MN, and SN that illustrates one of these variants. In Figure 21, upon receiving the BSR, the SN decides to activate the SCG permanently while the UE timer is running. The SN sends the UE an indication that the SCG should be activated, which causes the UE to stop the timer and keep the SCG activated (at least until a subsequent event or message causing deactivation).

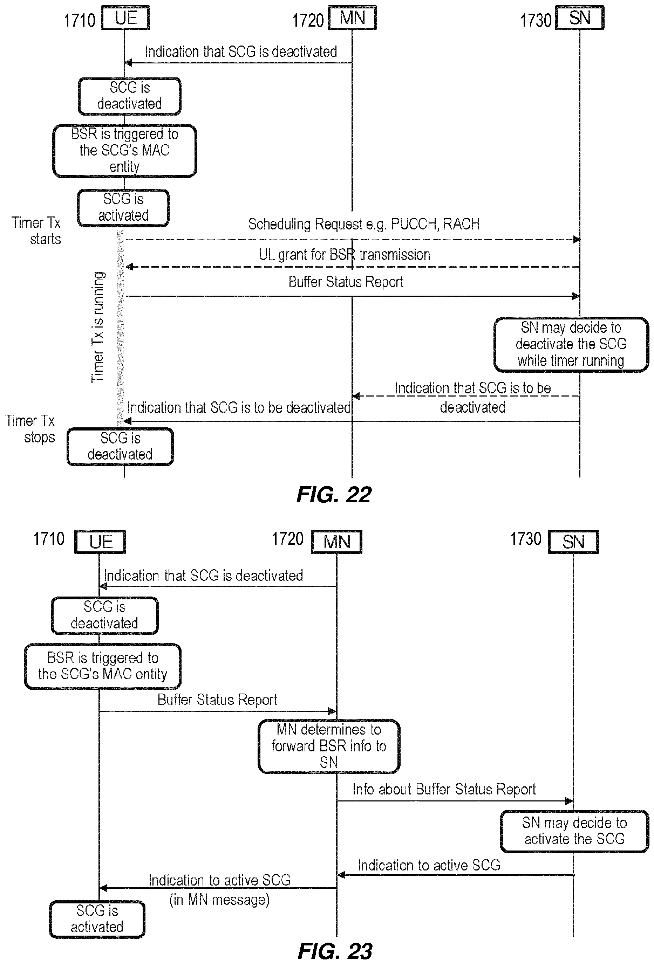

Figure 22 is a signal flow diagram between UE, MN, and SN that illustrates another of these variants. In Figure 22, upon receiving the BSR, the SN decides to deactivate the SCG permanently while the UE timer is running. The SN sends the UE an indication that the SCG should be deactivated, which causes the UE to stop the timer and deactivate the SCG (at least until a subsequent event or message causing activation).

In embodiments of the second group, a BSR can be triggered at the UE's SCG MAC entity while the SCG is deactivated by any of the events listed above in the discussion of the first group.

In some embodiments, the triggering events for BSR at a deactivated SCG's MAC entity can be restricted to a subset of those listed above, and/or a subset of triggering events for an activated SCG. In one variant, the triggering events for BSR at the SCG's MAC entity only include those events where UL data becomes available for the SCG. As an example, one or both of the events where the *periodicBSR-Timer* expires and/or when the *retxBSR-Timer* expires can be excluded from triggering BSR at the SCG MAC entity when SCG is deactivated. This exclusion would avoid UE transmission of a periodic BSR to the SCG when there is no available UL data for an SCG-associated bearer. In such case, a BSR to the deactivated SCG is only triggered when there is UL data available for the SCG, which then would be a typical trigger to activate the SCG.

In some embodiments, *retxBSR-Timer* and/or *periodicBSR-Timer* can be stopped for the SCG MAC entity upon the UE deactivating the SCG. These timers can be restarted upon the UE reactivating the SCG. In other embodiments, *retxBSR-Timer* and/or *periodicBSR-Timer* can be paused by the SCG's MAC entity upon the UE deactivating the SCG. These timers can be resumed upon the UE reactivating the SCG.

In some embodiments, the UE can have a separate BSR configuration for the SCG MAC entity for use while in SCG deactivated state. This separate configuration can include different BSR triggering events compared to the BSR configuration for use in SCG activated state. In one example, the network can provide separate BSR configurations for the two SCG states, and the UE can apply the BSR configuration corresponding to the actual SCG state at any time. In another example, the network configures the SCG MAC entity with a first BSR configuration when moving the SCG to deactivated state, and then possibly reconfigures the SCG MAC entity with a second BSR configuration when moving the SCG back to activated state. In this latter example, the different triggering events are achieved by a network implementation.

In a third group of embodiments, a UE determines availability of UL data that should trigger a BSR in the SCG. The UE PDCP and RLC layers calculates the available UL data volume for the SCG. Subsequently, the UE determines the current SCG state, i.e., activated or deactivated. When the current SCG state is activated, the UE creates and transmits a BSR in the SCG indicating the available UL data volume for the SCG. Otherwise, when the current SCG state is deactivated, the UE creates and transmits a BSR in the MCG indicating the available UL data volume for the SCG.

In embodiments of the third group, a BSR can be triggered at the UE's SCG MAC entity while the SCG is deactivated by any of the events listed above in the discussion of the first group.

In some embodiments, the UE creates a BSR MAC CE for the SCG and encapsulates this MAC CE into another MAC CE to be transmitted in the MCG. In other embodiments, the UE creates a new BSR MAC CE to be transmitted in the MCG, which includes a BSR for the SCG. In other embodiments, an existing BSR MAC CE to be transmitted in the MCG can be enhanced and/or expanded to include LCG IDs for the UE's SCG MAC entity. In other embodiments, the available UL data volume for a split bearer can be reporting only in a BSR from MCG MAC entity.

In embodiments of the third group, when the SCG is deactivated, the SCG MAC entity does not transmit a triggered BSR to the SCG (e.g., via the PSCell); rather, the BSR is instead transmitted via the activated MCG. In some embodiments, the SCG BSR transmission via the MCG can be triggered based one or more rules and/or conditions. For example, MCG transmission can be used if that is the only configured path for an UL split bearer and/or for an SCG bearer in general. One way to implement this is the SCG MAC entity indicating to the MCG MAC entity that BSR needs to be transmitted for a deactivated SCG. The SCG MAC entity can generate the BSR MAC CE according to desired format for transmission and provide it to the MCG MAC entity, which can encapsulate it as an SCG MAC CE (e.g., including an indication that it an SCG MAC CE to be processed at the SN). The MCG MAC CE entity can transmit the encapsulated SCG MAC CE via the PCell.

In some embodiments, the BSR can be transmitted via the MCG regardless of the UE's configuration, e.g., UL split bearers, SCG bearers, BSR configurations, PDCP configuration regarding data volume, etc. Hence, when a BSR is triggered for the SCG and/or PDCP indicates data volume to the SCG (e.g., based on pre-defined and/or configured rules), the SCG does not transmit BSR via the SCG (e.g., does not send an UL scheduling request).

In some embodiments, after the SCG MAC entity indicates to the MCG MAC entity that a BSR needs to be transmitted for a deactivated SCG BSR (and provides necessary information about format, LCH/LCG having data to be transmitted, etc.), the SCG MAC entity considers the BSR as cancelled. In other embodiments, the SCG BSR is considered as cancelled only upon receiving an UL grant from the SCG or upon network activation of the SCG. In some embodiments, a timer is introduced to control how frequently the SCG can indicate a BSR to the MCG MAC entity, e.g., every t subframes.

In some embodiments, forwarding a BSR for the SCG MAC entity to the MCG MAC entity can be restricted to only regular BSRs and/or periodic BSRs. In such case, since SCG is deactivated with no UL resources allocated for UL transmission, padding BSRs are not triggered nor forwarded.

In other embodiments, forwarding a BSR for the SCG MAC entity to the MCG MAC entity can be restricted to only regular BSRs. This restriction is based on the rationale that only regular BSR can trigger a SR when there are no UL resources for data transmission, and a deactivated SCG is equivalent to no UL resources for data transmission. With the periodic BSR excluded, the SCG configuration related to periodic BSR reporting can be simplified and unnecessary indication of the BSR MAC CE of SCG via MCG can be reduced and/or avoided.

Operation of an example in which forwarding applies to the regular BSR and only includes the logical channel that triggered BSR (only one LCH is reported) can be specified by the following procedural statements, which can be part of a relevant 3GPP specification, such as in section 5.4.5 of 3GPP TS 38.321 (NRMAC):
*** Begin proposed 3GPP specification text ***
   The MAC entity shall:
   1>if the Buffer Status reporting procedure determines that at least one BSR has been triggered and not cancelled:
   2> if this MAC entity is de-activated and if a regular BSR has been triggered:
      3> indicate to the other MAC entity the logical channel that triggered the BSR and the buffer status
   2> else if UL-SCH resources are available for a new transmission and the UL-SCH resources can accommodate the BSR MAC CE plus its subheader as a result of logical channel prioritization:
*** End proposed 3GPP specification text ***

In some embodiments, receiving a BSR from the SCG MAC entity for a deactivated SCG causes the MCG to construct an SCG BSR MAC CE. For example, SCG BSR MAC CEs can be identified by the MCG MAC entity using a different LCID or (e)LCID than used in existing BSR MAC CEs. On the other hand, such a SCG BSR MAC CE can have the same LCH priority as the existing BSR MAC CE (with the exception of BSR including for padding) in the context of the procedure of allocation of resources for new data transmission specified in 3GPP TS 38.321 section 5.4.3.1.1.

In some embodiments, only a configurable subset of LCHs (and/or LCGs) can trigger a BSR MAC CE when the SCG is deactivated. For example, the traffic associated with this subset can be delay intolerant (e.g., URLLC), while the traffic in the remaining LCHs (and/or LCGs) can be delay tolerant (e.g., UE application layer logging messages, application layer software updates, etc.). For this configuration, an additional parameter be added to the existing RRC *LogicalChannelConfig* IE, such as an optional *bsr-AllowedInDeactivated* field with an enumerated value of "true" indicating BSR MAC CE allowed for the LCH when the SCG is deactivated. If the *bsr-AllowedInDeactivated* field is not present, then BSR MAC CE is not allowed for the LCH when the SCG is deactivated. This operation can also be specified by the following procedural statements, which can be part of a relevant 3GPP specification:
*** Begin proposed 3GPP specification text ***
   3> indicate to the other MAC entity the logical channel that triggered the BSR and the buffer status, if the logical channel is configured with *bsr-AllowedInDeactivated*
*** End proposed 3GPP specification text ***

In other embodiments, reception of an SCG BSR MAC CE from SCG MAC entity at the MSG MAC entity allows the UE to trigger a SR when there is no UL-SCH source available for a new transmission at the MCG. In this way, an SCG BSR MAC CE can be treated in the same way as arrival of new UL data by the MCG MAC entity. This is different from other MAC CEs (e.g., configured grant confirmation, PHR, etc.) that conventionally do not trigger a SR for UL resources. Operations of these embodiments can be specified by the following procedural statements that can be part of a relevant 3GPP specification, such as in section 5.4.5 of 3GPP TS 38.321 (NR MAC):
*** Begin proposed 3GPP specification text ***
   2>if SCG BSR is triggered or a Regular BSR has been triggered and *logicalChannelSR-DelayTimer* is not running:
   3> if there is no UL-SCH resource available for a new transmission; or
   3>if the MAC entity is configured with configured uplink grant(s) and the Regular BSR was triggered for a logical channel for which *logicalChannelSR-Mask* is set to *false*; or
   3>if the UL-SCH resources available for a new transmission do not meet the LCP mapping restrictions (see clause 5.4.3.1) configured for the logical channel that triggered the BSR:
      4>trigger a Scheduling Request.
*** End proposed 3GPP specification text ***

Figure 23 is a signal flow diagram between UE, MN, and SN that illustrates certain embodiments of the third group. Upon receiving a BSR from the UE with a deactivated SCG, the MN determines whether to forward the BSR (or information derived from the BSR, such as an indication) to the SN associated with the deactivated SCG. The determination can be based on whether the BSR includes information associated with the deactivated SCG, information related to an SN-terminated bearer (e.g., if data is reported for associated LCHs and/or LCGs), and/or available UL data volume relative to a threshold. For example, a forwarded BSR (or more generally, information about the BSR) may be transmitted over the Xn interface, via either the user plane or the control plane (e.g., as a signaling message). Upon receiving the SCG BSR information from the MN, the SN determines whether it should activate the SCG. If it determines to activate the SCG, the SN sends an indication to the MN, which in turn sends an indication to the UE that the SCG should be activated. Upon reception, the UE considers the SCG activated.

In a variant, the MN can activate the SCG in response to receiving the BSR associated with the deactivated SCG. The MN can inform the SN of this SCG activation, after which the SN can send the indication directly to the UE rather than indirectly via the MN.

Conventionally, for a UE in MR-DC, the PDCP layer controls whether to indicate data volume to MCG and/or SCG, for BSR to be possibly transmitted on MCG and/or SCG, according to rule(s) defined in 3GPP specifications. However, BSR transmission and associated configuration (e.g., retransmission timers, periodic timers, etc.) are done per cell group, i.e., each of the MCG and SCG has its own BSR configuration.

While the above-described embodiments concern modifications and/or enhancements at the MAC layer, other embodiments involve modifications and/or enhancements at the PDCP layer when an SCG is deactivated. Some of these embodiments facilitate notifying the UE PDCP entity that the SCG is deactivated and based on that notification, the UE PDCP entity determines whether or not to provide data volume to the primary path (e.g., SCG).

In general, any SCG BSR reporting via MCG can be conditioned on whether the SCG is configured as the primary path and/or a rule that data volume is to be provided only to the primary path. In other words, if data volume is above the threshold and is to be indicated to both MCG and SCG MAC entities, the procedure described here is not triggered.

In some embodiments, the MN receives from the UE the BSR associated to the SCG and determine to forward to the SN only if at least one condition is fulfilled, for example, if the data volume is above a pre-determined threshold (e.g., configured by the MN and/or the SN).

In some embodiments, a BSR is not transmitted via the SCG when the SCG is deactivated, regardless of other rules for transmission via the SCG (e.g., if SCG is primary path and/or data volume is above a data volume threshold). Hence, only the MN receives the SCG BSR and, upon reception, determines whether to activate the SCG. Alternately, upon reception of the SCG BSR, the MN indicates some SCG data activity/traffic to the SN, from which the SN can determine whether to activate the SCG. For example, either of these determinations can be based whether the BSR indicates a data volume above a certain threshold for LCGs associated with the SCG.

In some embodiments, if the SCG is configured as the primary path and the SCG is deactivated, the UE can ignore other rules (e.g., data volume relative to a threshold) for transmitting data in both primary and secondary paths defined in the PDCP layer and transmit BSR via the MCG instead. In a variant, the network can re-configure the MCG as the primary path when the SCG is being deactivated (if not already the case), so that BSRs will be transmitted via the MCG/primary path while the SCG is deactivated.

In some embodiments, upon considering the SCG as deactivated, the UE SCG MAC entity stops performing BSR-related actions. For example, upon receiving an indication to deactivate the SCG, the UE stops maintaining BSR-related state variables, such as stopping timer for periodic BSR (e.g., *periodicBSR-Timer*) if running, stopping retransmission BSR timer (e.g., *retxBSR-Timer*), stopping *logicalChannelSR-DelayTimerApplied* if running, and stopping *logicalChannelSR-DelayTimer* if running.

In a fourth group of embodiments, a UE determines availability of UL data that should trigger a BSR in the SCG. The UE PDCP and RLC layers calculates the available UL data volume for the SCG. Subsequently, the UE determines the current SCG state, i.e., activated or deactivated. When the current SCG state is activated, the UE creates and transmits a BSR in the SCG indicating the available UL data volume for the SCG. Otherwise, when the current SCG state is deactivated, the UE creates and transmits an RRC message in the MCG indicating the available UL data volume for the SCG. According to the invention, an *UEAssistanceInformation* RRC message is used for this purpose.

In some embodiments, the UE PDCP entity does not provide data volume to the SCG MAC entity for a deactivated SCG, regardless of whether any other rules and/or conditions for indicating data volume to the SCG are fulfilled (e.g., SCG is the primary path, data volume is larger than a threshold, etc.) For the deactivated SCG, the PDCP layer indicates data volume for the MCG MAC entity, which prevents the SCG MAC entity from triggering a BSR. The UE PDCP entity may provide data volume to the SCG MAC entity for an activated SCG, possibly in conjunction with fulfillment of other rules and/or conditions for reporting data volume (discussed below).

In these embodiments, the PDCP entity must be informed when a cell group (e.g., SCG) becomes deactivated. For example, if deactivation is performed at MAC layer (via deactivation MAC CE), the MAC layer indicates to upper layers that a cell group (e.g., SCG) is deactivated. Otherwise, the MAC layer indicates to upper layers that the cell group (e.g., SCG) is activated. As another example, if deactivation is performed at RRC layer (e.g., via deactivation field or IE), the RRC layer indicates to lower layers that the cell group (e.g., SCG) is deactivated. Otherwise, the RRC layer indicates to lower layers that the cell group (e.g., SCG) is activated.

In other embodiments, the UE PDCP entity does not provide data volume to the SCG MAC entity for a deactivated SCG if data volume is (or can be) indicated to a MAC entity of another cell group according to various pre-defined conditions and/or rules. In the example of a split DRB, if the PDCP entity is supposed to provide data volume to both MAC entities according to some pre-defined rules (e.g., calculated data volume above a configured threshold), when the SCG MAC is deactivated the PDCP entity only provides data volume to the MCG MAC entity. In other words, the PDCP entity does not provide data volume to SCG MAC entity of a deactivated SCG so long as the PDCP entity can instead report it to the MCG MAC entity. Based on this information, the MN can determine whether or not to activate the SCG. For example, a pre-determined rule may state that if the indicated data volume exceeds a certain threshold, the MN should activate the SCG.

In another example of a split DRB, if the PDCP entity is supposed to provide data volume only to the SCG MAC entity according to some pre-defined rules (e.g., SCG MAC is configured as the primary path and calculated data volume is below a configured threshold), the PDCP entity provides UL data volume to the MCG MAC entity instead if the SCG is deactivated.

In another example of an SCG DRB, if the SCG is deactivated, the UE reports the BSR of logical channel(s) associated with the SCG DRB via the MCG BSR CE. This can be achieved, for example, by adding new fields to the MCG BSR CE to carry the buffer status also for logical channels of the SCG, as discussed above.

In some embodiments, when the PDCP entity does not provide data volume to SCG MAC entity of a deactivated SCG but otherwise should have provided data volume to the SCG MAC entity if the SCG were activated, the UE can send an RRC message to the MN via the MCG indicating there is available UL data volume that should have triggered a BSR over the deactivated SCG. For example, the UE can send this RRC message when the SCG is configured as the primary path and the conditions for providing data volume to the SCG MAC entity indicates that data volume is to be provided only to the primary path. That message may include the UL data volume that would have been transmitted with the BSR via the SCG and/or the MAC CE BSR generated by the UE's SCG (e.g., included in the RRC message as a container). On the other hand, if data volume is above the threshold and is to be indicated to both MCG and SCG MAC entities, the UE does not send the RRC message.

In other embodiments, when the PDCP entity does not provide data volume to SCG MAC entity of a deactivated SCG but otherwise should have provided data volume to both MAC entities if the SCG were activated, the PDCP entity can indicates to the MCG MAC entity that there is data for the SCG MAC entity and/or that the SCG should be activated. For example, the PDCP entity can send a PDCP PDU via the MCG MAC entity to indicate to the MN that there is UL data available for the SCG.

In some variants, the indication can be sent as a PDCP Control PDU, either as a separate PDCP Control PDU or as one or more parameters in another PDCP Control PDU (e.g., in the header and/or within the PDU). In other variants, the indication can be sent as one or more parameters in a PDCP Data PDU (e.g., in the header and/or within the PDU). The indication about UL data available for the SCG may also include information about the radio bearer(s) for which data is available and the amount of data that is available.

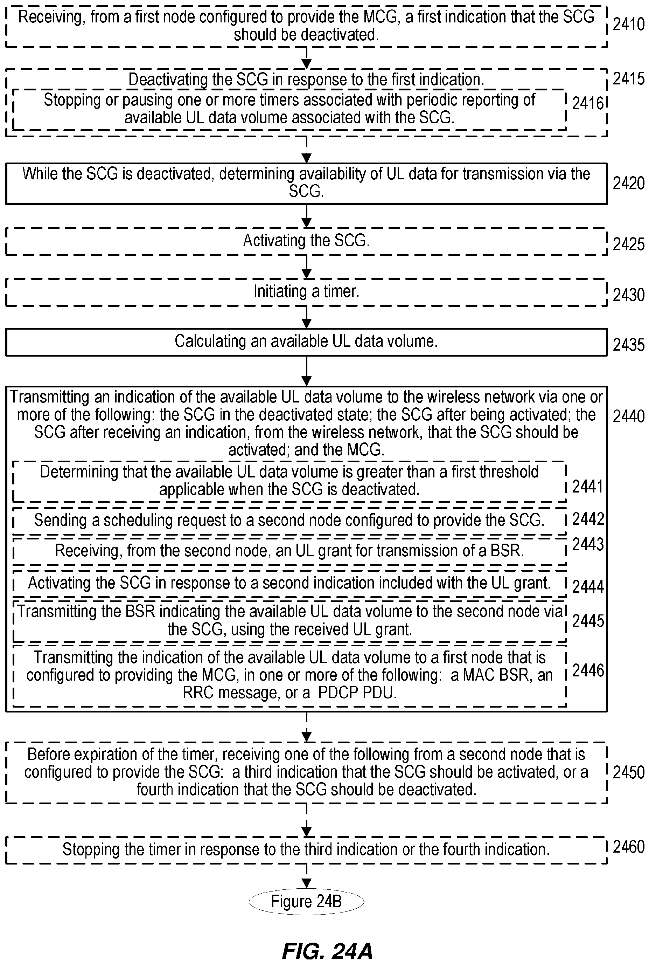

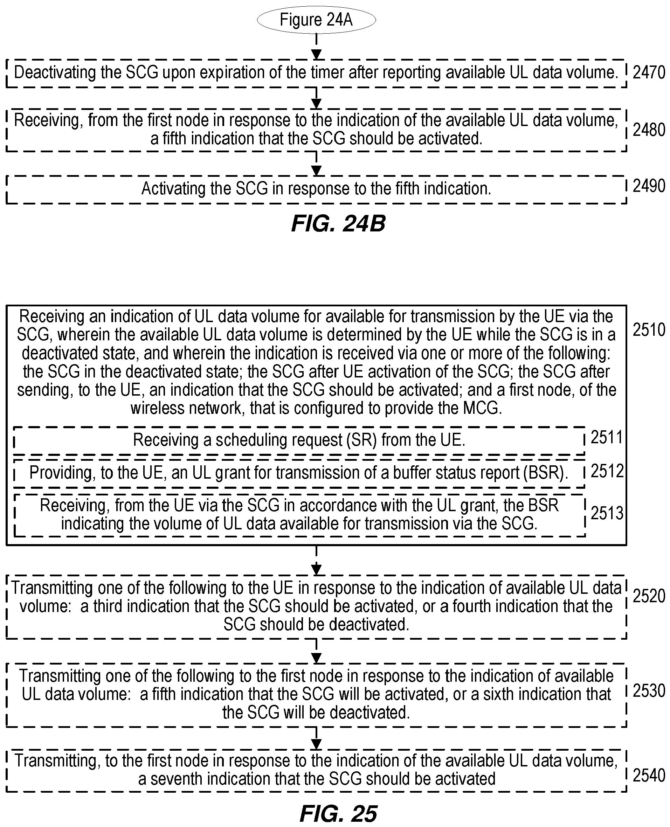

The embodiments described above can be further illustrated with reference to Figures 24-26, which show exemplary methods (e.g., procedures) performed by a UE, a first node, and a second node, respectively. In other words, various features of operations described below correspond to various embodiments described above. These exemplary methods can be used cooperatively to provide various exemplary benefits and/or advantages. Although Figures 24-26 show specific blocks in a particular order, the operations of the respective methods can be performed in different orders than shown and can be combined and/or divided into blocks having different functionality than shown. Optional blocks or operations are indicated by dashed lines.

In particular, Figure 24 (which includes Figures 24A-B) shows a flow diagram of an exemplary method (e.g., procedure) for a UE configured with an MCG and an SCG in a wireless network, according to various embodiments of the present disclosure. The exemplary method is perfrormed by a UE (e.g., wireless device, IoT device, modem, etc. or component thereof) such as described elsewhere herein.

The exemplary method includes operations of block 2420, where the the UE, while the SCG is in a deactivated state, determines availability of UL data for transmission via the SCG. The exemplary method also includes operations of block 243 5, where the UE calculates an available UL data volume. The exemplary method also includes operations of block 2440, where the UE transmits an indication of the available UL data volume to the wireless network via the MCG.

In some embodiments, the exemplary method can also include the operations of blocks 2410-2415, where the UE can receive, from a first node configured to provide the MCG, a first indication that the SCG should be deactivated and deactivate the SCG in response to the first indication. In some embodiments, deactivating the SCG (e.g., in block 2415) can include the operations of sub-block 2416, where the UE can stop or pause one or more timers associated with periodic reporting of available UL data volume associated with the SCG. As discussed above, this operation can avoid periodic BSRs (particularly with no actual UL data to report) while the SCG is in the deactivated state.

According to the invention, the indication of the available UL data volume is an indication that UL data is available for transmission via the SCG.

In some embodiments, transmitting the indication of the available UL data volume (e.g., in block 2440) can include the operations of sub-blocks 2443 and 2445. In sub-block 2443, the UE can receive, from a second node configured to provide the SCG, an UL grant for transmission of a BSR. In sub-block 2445, the UE can transmit the BSR indicating the available UL data volume to the second node via the SCG, using the received UL grant.

In some of these embodiments, transmitting the indication of the available UL data volume (e.g., in block 2440) can also include the operations of sub-block 2442, where the UE can send a scheduling request (SR) to the second node. The UL grant can be received in response to the SR and one of the following applies:
- the SR and the BSR are transmitted while the SCG is in the deactivated state (e.g., as illustrated in Figure 17);
- the SR is transmitted while the SCG is in the deactivated state and the BSR is transmitted after activating the SCG (e.g., as illustrated in Figure 18); or
- the SR and the BSR are transmitted after activating the SCG (e.g., as illustrated in Figures 19-22).

In some variants, the UL grant can include a second indication that the SCG should be activated and transmitting the indication of the available UL data volume can also include the operations of sub-block 2444, where the UE can activate the SCG in response to the second indication and before transmitting the BSR (e.g., in block 2445).

In other of these embodiments, the UL grant can be a configured UL grant for use while the SCG is in the deactivated state. In such case, the configured UL grant can be received from the second node before the SCG was deactivated.

In some embodiments, the exemplary method can include the operations of block 2425, where the UE can activate the SCG based on determining the availability of the UL data (e.g., in block 2420). In these embodiments, the exemplary method can also include the operations of block 2430, where the UE can initiate a timer in response to activating the SCG. Examples of such embodiments are shown in Figures 20-22. In some of these embodiments, the exemplary method can also include the operations of block 2470, where the UE can deactivate the SCG upon expiration of the timer after reporting the available UL data volume.

In some of these embodiments, the exemplary method can also include the operations of blocks 2450-2460. In block 2450, the UE can, before expiration of the timer, receive one of the following from a second node that is configured to provide the SCG:
- a third indication that the SCG should be activated (as illustrated in Figure 21), or
- a fourth indication that the SCG should be deactivated (as illustrated in Figure 22).
In block 2460, the UE can stop the timer in response to the third indication or the fourth indication.

In some embodiments, transmitting the indication of the available UL data volume (e.g., in block 2440) can include the operations of sub-block 2446, where the UE can transmit an indication of the available UL data volume in one of the following to a first node (e.g., the UE's MN) configured to provide the MCG, in one or more of the following: a MAC BSR, an RRC message, or a PDCP PDU. An example is illustrated by Figure 23. However, according to the invention, if the SCG is in deactivated state, the indication is transmitted in an RRC message that is a *UEAssistanceInformation* message. In other variants not covered by the claims, the MAC BSR can be transmitted using the RRC message as a container.

In some of these embodiments, the exemplary method can also include the operations of sub-blocks 2480-2490, where the UE can receive, from the first node in response to the indication of the available UL data volume, a fifth indication that the SCG should be activated, and activate the SCG in response to the fifth indication.

In various embodiments, calculating the available UL data volume (e.g., in block 2435) can be based on one or more of the following:
- a type of bearer associated with the available UL data,
- whether MCG or SCG has been configured as a PDCP primary path, and
- whether PDCP duplication is enabled.

In some embodiments, transmitting the indication of the available UL data volume (e.g., in block 2440) can include and/or be based on the operations of sub-block 2441, where the UE determine that the available UL data volume is greater than a first threshold applicable when the SCG is in the deactivated state. In some of these embodiments, the first threshold can be different from a second threshold applicable when the SCG is in an activated state.

In addition, Figure 25 shows a flow diagram of an exemplary method (e.g., procedure) for a second node configured to provide an SCG for a UE that is also configured with an MCG in a wireless network, according to various embodiments of the present disclosure. This exemplary node is however not covered by the claims but is useful for understanding the invention.

The exemplary method can be performed by a network node *(e.g.,* base station, eNB, gNB, ng-eNB, en-gNB, *etc.,* or components thereof) such as described elsewhere herein.

The exemplary method can include the operations of block 2510, where the second node can receive from the UE an indication of UL data volume available for transmission by the UE via the SCG. The available UL data volume is determined by the UE while the SCG is in a deactivated state. The indication can be received via one or more of the following:
- the SCG in the deactivated state;
- the SCG after UE activation of the SCG;
- the SCG after sending, to the UE, an indication that the SCG should be activated; and
- a first node, of the wireless network, that is configured to provide the MCG.

In some embodiments, the indication of the available data volume is one of the following: an indication that UL data is available for transmission via the SCG, an indication of the volume of UL data available for transmission via the SCG, or an indication that the SCG should be activated.

In various embodiments, the indicated volume of UL data available for transmission via the SCG is based on one or more of the following:
- a type of bearer associated with the available UL data,
- whether MCG or SCG has been configured as a PDCP primary path, and
- whether PDCP duplication is enabled.

In some embodiments, the indicated volume of UL data available for transmission via the SCG can be greater than a first threshold applicable when the SCG is in the deactivated state. In such embodiments, the first threshold can be different from a second threshold applicable when the SCG is in an activated state.

In some embodiments, receiving the indication (e.g., in block 2510) can include the operations of sub-blocks 2512-2513, where the second node can provide, to the UE, an UL grant for transmission of a BSR; and receive, from the UE via the SCG in accordance with the UL grant, the BSR indicating the volume of UL data available for transmission via the SCG.

In some of these embodiments, receiving the indication (e.g., in block 2510) can also include the operations of sub-block 2511, where the second node can receive a SR from the UE. The UL grant can be provided in response to the SR and one of the following applies:
- the SR and the BSR are received while the SCG is in the deactivated state (e.g., as illustrated in Figure 17);
- the SR is received while the SCG is in the deactivated state and the BSR is received after the UE activates the SCG (e.g., as illustrated in Figure 18); or
- the SR and the BSR are received after the UE activates the SCG (e.g., as illustrated in Figures 19-22).

In other of these embodiments, the UL grant is a configured UL grant for use while the SCG is in the deactivated state. Moreover, the configured UL grant is provided to the UE before or together with the indication that the SCG should be deactivated.

In some embodiments, the exemplary method can also include the operations of block 2520, where the second node can transmit one of the following to the UE in response to the indication of available UL data volume (e.g., received in block 2510):
- a third indication that the SCG should be activated (as illustrated in Figure 21), or
- a fourth indication that the SCG should be deactivated (as illustrated in Figure 22).

In some embodiments, the exemplary method can also include the operations of block 2530, where the second node can transmit one of the following to the first node in response to the indication of available UL data volume (e.g., received in block 2510):
- a fifth indication that the SCG will be activated (as illustrated in Figure 21), or
- a sixth indication that the SCG will be deactivated (as illustrated in Figure 22).

In some embodiments, the indication of the available UL data volume can be received from the first node. In such embodiments, the exemplary method can also include the operations of block 2540, where the second node can transmit, to the first node in response to the indication of the available UL data volume, a seventh indication that the SCG should be activated. An example is illustrated in Figure 23.

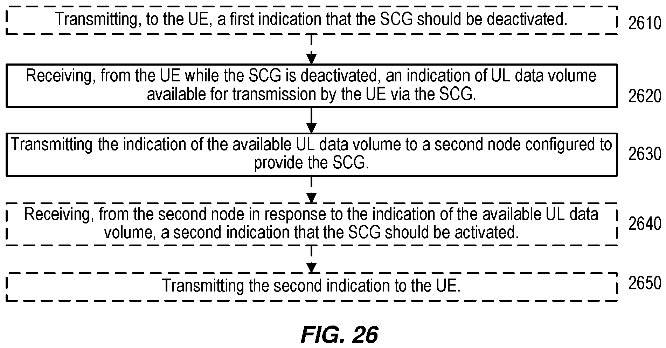

In addition, Figure 26 shows a flow diagram of an exemplary method (e.g., procedure) for first node configured to provide an MCG for a UE that is also configured with an SCG in a wireless network, according to various embodiments of the present disclosure. The exemplary method can be performed by a network node (*e.g.,* base station, eNB, gNB, ng-eNB, en-gNB, *etc.,* or components thereof) such as described elsewhere herein.

The exemplary method includes operations of block 2620, where the first node receives, from the UE while the SCG is in a deactivated state, an indication of UL data volume available for transmission by the UE via the SCG. The exemplary method also includes operations of block 2630, where the first node transmits the indication of the available UL data volume to a second node configured to provide the SCG.

In some embodiments, the exemplary method can also include operations of blocks 2640-2650, where the first node can receive, from the second node in response to the indication of the available UL data volume, a second indication that the SCG should be activated; and transmit the second indication to the UE. An example is illustrated by Figure 23.

In some embodiments, the indication of the available UL data volume is received from the UE in one or more of the following: a MAC BSR, an RRC message, and a PDCP PDU.

However, according to the invention, the indication is transmitted in an RRC message that is a *UEAssistanceInformation* message. In other variants, variants not covered by the claims, the MAC BSR is transmitted using the RRC message as a container.

According to the invention, the indication of the available UL data volume is an indication that UL data is available for transmission via the SCG.

In various embodiments, the indicated volume of UL data available for transmission via the SCG is based on one or more of the following:
- a type of bearer associated with the available UL data,
- whether MCG or SCG has been configured as a PDCP primary path, and
- whether PDCP duplication is enabled.

In some embodiments, the indicated volume of UL data available for transmission via the SCG can be greater than a first threshold applicable when the SCG is in the deactivated state. The first threshold can be different from a second threshold applicable when the SCG is in an activated state.

In some embodiments, the exemplary method can include operations of block 2610, where the first node can transmit to the UE a first indication that the SCG should be deactivated. This first indication can be transmitted before receiving the indication of available UL data volume (e.g., in block 2620).

Although various embodiments are described herein above in terms of methods, apparatus, devices, computer-readable medium and receivers, the person of ordinary skill will readily comprehend that such methods can be embodied by various combinations of hardware and software in various systems, communication devices, computing devices, control devices, apparatuses, non-transitory computer-readable media, *etc.*

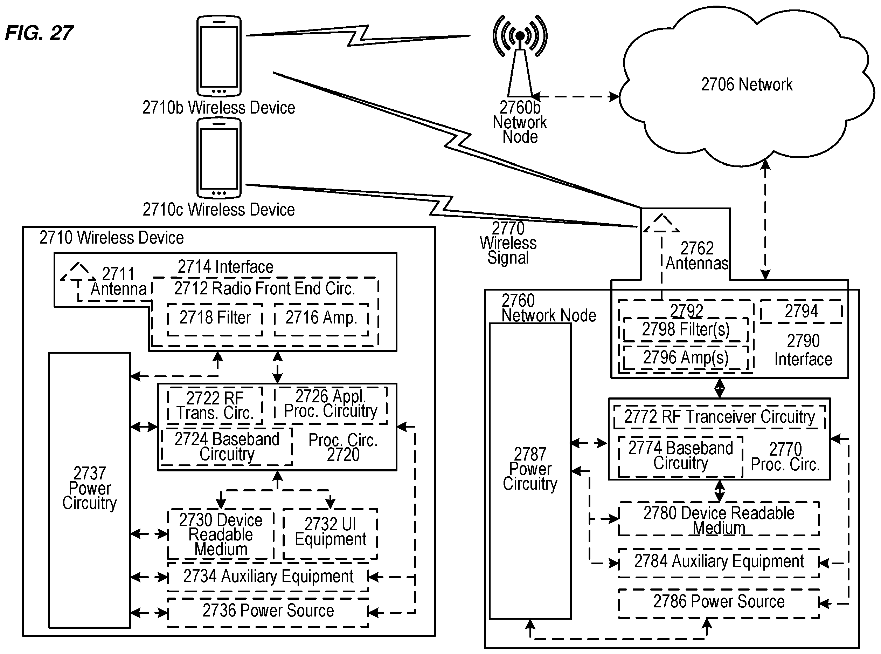

For example, Figure 27 shows an exemplary wireless network in which various embodiments disclosed herein can be implemented. For simplicity, the wireless network of Figure 27 only depicts network 2706, network nodes 2760 and 2760b, and WDs 2710, 2710b, and 2710c. In practice, a wireless network can further include any additional elements suitable to support communication between wireless devices or between a wireless device and another communication device, such as a landline telephone, a service provider, or any other network node or end device. Of the illustrated components, network node 2760 and wireless device (WD) 2710 are depicted with additional detail. The wireless network can provide communication and other types of services to one or more wireless devices to facilitate the wireless devices' access to and/or use of the services provided by, or via, the wireless network.

The wireless network can comprise and/or interface with any type of communication, telecommunication, data, cellular, and/or radio network or other similar type of system. In some embodiments, the wireless network can be configured to operate according to specific standards or other types of predefined rules or procedures. Thus, particular embodiments of the wireless network can implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 2706 can comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 2760 and WD 2710 comprise various components described in more detail below. These components work together in order to provide network node and/or wireless device functionality, such as providing wireless connections in a wireless network. In different embodiments, the wireless network can comprise any number of wired or wireless networks, network nodes, base stations, controllers, wireless devices, relay stations, and/or any other components or systems that can facilitate or participate in the communication of data and/or signals whether via wired or wireless connections.

Examples of network nodes include, but are not limited to, access points (APs) (e.g., radio access points), base stations (BSs) *(e.g.,* radio base stations, Node Bs, evolved Node Bs (eNBs) and NR NodeBs (gNBs)). Base stations can be categorized based on the amount of coverage they provide (or, stated differently, their transmit power level) and can then also be referred to as femto base stations, pico base stations, micro base stations, or macro base stations. A base station can be a relay node or a relay donor node controlling a relay. A network node can also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station can also be referred to as nodes in a distributed antenna system (DAS).

Further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node can be a virtual network node as described in more detail below. More generally, however, network nodes can represent any suitable device (or group of devices) capable, configured, arranged, and/or operable to enable and/or provide a wireless device with access to the wireless network or to provide some service to a wireless device that has accessed the wireless network.

In Figure 27, network node 2760 includes processing circuitry 2770, device readable medium 2780, interface 2790, auxiliary equipment 2784, power source 2786, power circuitry 2787, and antenna 2762. Although network node 2760 illustrated in the example wireless network of Figure 27 can represent a device that includes the illustrated combination of hardware components, other embodiments can comprise network nodes with different combinations of components. It is to be understood that a network node comprises any suitable combination of hardware and/or software needed to perform the tasks, features, functions and methods and/or procedures disclosed herein. Moreover, while the components of network node 2760 are depicted as single boxes located within a larger box, or nested within multiple boxes, in practice, a network node can comprise multiple different physical components that make up a single illustrated component (e.g., device readable medium 2780 can comprise multiple separate hard drives as well as multiple RAM modules).

Similarly, network node 2760 can be composed of multiple physically separate components (e.g., a NodeB component and an RNC component, or a BTS component and a BSC component, *etc.),* which can each have their own respective components. In certain scenarios in which network node 2760 comprises multiple separate components (e.g., BTS and BSC components), one or more of the separate components can be shared among several network nodes. For example, a single RNC can control multiple NodeB's. In such a scenario, each unique NodeB and RNC pair, can in some instances be considered a single separate network node. In some embodiments, network node 2760 can be configured to support multiple radio access technologies (RATs). In such embodiments, some components can be duplicated (*e.g.,* separate device readable medium 2780 for the different RATs) and some components can be reused (*e.g.,* the same antenna 2762 can be shared by the RATs). Network node 2760 can also include multiple sets of the various illustrated components for different wireless technologies integrated into network node 2760, such as, for example, GSM, WCDMA, LTE, NR, WiFi, or Bluetooth wireless technologies. These wireless technologies can be integrated into the same or different chip or set of chips and other components within network node 2760.

Processing circuitry 2770 can be configured to perform any determining, calculating, or similar operations (*e.g.,* certain obtaining operations) described herein as being provided by a network node. These operations performed by processing circuitry 2770 can include processing information obtained by processing circuitry 2770 by, for example, converting the obtained information into other information, comparing the obtained information or converted information to information stored in the network node, and/or performing one or more operations based on the obtained information or converted information, and as a result of said processing making a determination.

Processing circuitry 2770 can comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide various functionality of network node 2760, either alone or in conjunction with other network node 2760 components (e.g., device readable medium 2780). Such functionality can include any of the various wireless features, functions, or benefits discussed herein.

For example, processing circuitry 2770 can execute instructions stored in device readable medium 2780 or in memory within processing circuitry 2770. In some embodiments, processing circuitry 2770 can include a system on a chip (SOC). As a more specific example, instructions (also referred to as a computer program product) stored in medium 2780 can include instructions that, when executed by processing circuitry 2770, can configure network node 2760 to perform operations corresponding to various exemplary methods (e.g., procedures) described herein.

In some embodiments, processing circuitry 2770 can include one or more of radio frequency (RF) transceiver circuitry 2772 and baseband processing circuitry 2774. In some embodiments, radio frequency (RF) transceiver circuitry 2772 and baseband processing circuitry 2774 can be on separate chips (or sets of chips), boards, or units, such as radio units and digital units. In alternative embodiments, part or all of RF transceiver circuitry 2772 and baseband processing circuitry 2774 can be on the same chip or set of chips, boards, or units

In certain embodiments, some or all of the functionality described herein as being provided by a network node, base station, eNB or other such network device can be performed by processing circuitry 2770 executing instructions stored on device readable medium 2780 or memory within processing circuitry 2770. In alternative embodiments, some or all of the functionality can be provided by processing circuitry 2770 without executing instructions stored on a separate or discrete device readable medium, such as in a hard-wired manner. In any of those embodiments, whether executing instructions stored on a device readable storage medium or not, processing circuitry 2770 can be configured to perform the described functionality. The benefits provided by such functionality are not limited to processing circuitry 2770 alone or to other components of network node 2760 but are enjoyed by network node 2760 as a whole, and/or by end users and the wireless network generally.

Device readable medium 2780 can comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that can be used by processing circuitry 2770. Device readable medium 2780 can store any suitable instructions, data or information, including a computer program, software, an application including one or more of logic, rules, code, tables, *etc.* and/or other instructions capable of being executed by processing circuitry 2770 and, utilized by network node 2760. Device readable medium 2780 can be used to store any calculations made by processing circuitry 2770 and/or any data received via interface 2790. In some embodiments, processing circuitry 2770 and device readable medium 2780 can be considered to be integrated.

Interface 2790 is used in the wired or wireless communication of signaling and/or data between network node 2760, network 2706, and/or WDs 2710. As illustrated, interface 2790 comprises port(s)/terminal(s) 2794 to send and receive data, for example to and from network 2706 over a wired connection. Interface 2790 also includes radio front end circuitry 2792 that can be coupled to, or in certain embodiments a part of, antenna 2762. Radio front end circuitry 2792 comprises filters 2798 and amplifiers 2796. Radio front end circuitry 2792 can be connected to antenna 2762 and processing circuitry 2770. Radio front end circuitry can be configured to condition signals communicated between antenna 2762 and processing circuitry 2770. Radio front end circuitry 2792 can receive digital data that is to be sent out to other network nodes or WDs via a wireless connection. Radio front end circuitry 2792 can convert the digital data into a radio signal having the appropriate channel and bandwidth parameters using a combination of filters 2798 and/or amplifiers 2796. The radio signal can then be transmitted via antenna 2762. Similarly, when receiving data, antenna 2762 can collect radio signals which are then converted into digital data by radio front end circuitry 2792. The digital data can be passed to processing circuitry 2770. In other embodiments, the interface can comprise different components and/or different combinations of components.

In certain alternative embodiments, network node 2760 may not include separate radio front end circuitry 2792, instead, processing circuitry 2770 can comprise radio front end circuitry and can be connected to antenna 2762 without separate radio front end circuitry 2792. Similarly, in some embodiments, all or some of RF transceiver circuitry 2772 can be considered a part of interface 2790. In still other embodiments, interface 2790 can include one or more ports or terminals 2794, radio front end circuitry 2792, and RF transceiver circuitry 2772, as part of a radio unit (not shown), and interface 2790 can communicate with baseband processing circuitry 2774, which is part of a digital unit (not shown).

Antenna 2762 can include one or more antennas, or antenna arrays, configured to send and/or receive wireless signals. Antenna 2762 can be coupled to radio front end circuitry 2790 and can be any type of antenna capable of transmitting and receiving data and/or signals wirelessly. In some embodiments, antenna 2762 can comprise one or more omni-directional, sector or panel antennas operable to transmit/receive radio signals between, for example, 2 GHz and 66 GHz. An omni-directional antenna can be used to transmit/receive radio signals in any direction, a sector antenna can be used to transmit/receive radio signals from devices within a particular area, and a panel antenna can be a line of sight antenna used to transmit/receive radio signals in a relatively straight line. In some instances, the use of more than one antenna can be referred to as MIMO. In certain embodiments, antenna 2762 can be separate from network node 2760 and can be connectable to network node 2760 through an interface or port.

Antenna 2762, interface 2790, and/or processing circuitry 2770 can be configured to perform any receiving operations and/or certain obtaining operations described herein as being performed by a network node. Any information, data and/or signals can be received from a wireless device, another network node and/or any other network equipment. Similarly, antenna 2762, interface 2790, and/or processing circuitry 2770 can be configured to perform any transmitting operations described herein as being performed by a network node. Any information, data and/or signals can be transmitted to a wireless device, another network node and/or any other network equipment.

Power circuitry 2787 can comprise, or be coupled to, power management circuitry and can be configured to supply the components of network node 2760 with power for performing the functionality described herein. Power circuitry 2787 can receive power from power source 2786. Power source 2786 and/or power circuitry 2787 can be configured to provide power to the various components of network node 2760 in a form suitable for the respective components (*e.g.,* at a voltage and current level needed for each respective component). Power source 2786 can either be included in, or external to, power circuitry 2787 and/or network node 2760. For example, network node 2760 can be connectable to an external power source (*e.g.,* an electricity outlet) via an input circuitry or interface such as an electrical cable, whereby the external power source supplies power to power circuitry 2787. As a further example, power source 2786 can comprise a source of power in the form of a battery or battery pack which is connected to, or integrated in, power circuitry 2787. The battery can provide backup power should the external power source fail. Other types of power sources, such as photovoltaic devices, can also be used.

Alternative embodiments of network node 2760 can include additional components beyond those shown in Figure 27 that can be responsible for providing certain aspects of the network node's functionality, including any of the functionality described herein and/or any functionality necessary to support the subject matter described herein. For example, network node 2760 can include user interface equipment to allow and/or facilitate input of information into network node 2760 and to allow and/or facilitate output of information from network node 2760. This can allow and/or facilitate a user to perform diagnostic, maintenance, repair, and other administrative functions for network node 2760.

In some embodiments, a wireless device (WD, *e.g.,* WD 2710) can be configured to transmit and/or receive information without direct human interaction. For instance, a WD can be designed to transmit information to a network on a predetermined schedule, when triggered by an internal or external event, or in response to requests from the network. Examples of a WD include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, *etc.*

A WD can support device-to-device (D2D) communication, for example by implementing a 3GPP standard for sidelink communication, vehicle-to-vehicle (V2V), vehicle-to-infrastructure (V2I), vehicle-to-everything (V2X) and can in this case be referred to as a D2D communication device. As yet another specific example, in an Internet of Things (IoT) scenario, a WD can represent a machine or other device that performs monitoring and/or measurements and transmits the results of such monitoring and/or measurements to another WD and/or a network node. The WD can in this case be a machine-to-machine (M2M) device, which can in a 3GPP context be referred to as an MTC device. As one particular example, the WD can be a UE implementing the 3GPP narrow band internet of things (NB-IoT) standard. Particular examples of such machines or devices are sensors, metering devices such as power meters, industrial machinery, or home or personal appliances (*e.g.,* refrigerators, televisions, *etc.)* personal wearables (*e.g.,* watches, fitness trackers, *etc*.). In other scenarios, a WD can represent a vehicle or other equipment that is capable of monitoring and/or reporting on its operational status or other functions associated with its operation. A WD as described above can represent the endpoint of a wireless connection, in which case the device can be referred to as a wireless terminal. Furthermore, a WD as described above can be mobile, in which case it can also be referred to as a mobile device or a mobile terminal.

As illustrated, wireless device 2710 includes antenna 2711, interface 2714, processing circuitry 2720, device readable medium 2730, user interface equipment 2732, auxiliary equipment 2734, power source 2736 and power circuitry 2737. WD 2710 can include multiple sets of one or more of the illustrated components for different wireless technologies supported by WD 2710, such as, for example, GSM, WCDMA, LTE, NR, WiFi, WiMAX, or Bluetooth wireless technologies, just to mention a few. These wireless technologies can be integrated into the same or different chips or set of chips as other components within WD 2710.

Antenna 2711 can include one or more antennas or antenna arrays, configured to send and/or receive wireless signals, and is connected to interface 2714. In certain alternative embodiments, antenna 2711 can be separate from WD 2710 and be connectable to WD 2710 through an interface or port. Antenna 2711, interface 2714, and/or processing circuitry 2720 can be configured to perform any receiving or transmitting operations described herein as being performed by a WD. Any information, data and/or signals can be received from a network node and/or another WD. In some embodiments, radio front end circuitry and/or antenna 2711 can be considered an interface.

As illustrated, interface 2714 comprises radio front end circuitry 2712 and antenna 2711. Radio front end circuitry 2712 comprise one or more filters 2718 and amplifiers 2716. Radio front end circuitry 2714 is connected to antenna 2711 and processing circuitry 2720 and can be configured to condition signals communicated between antenna 2711 and processing circuitry 2720. Radio front end circuitry 2712 can be coupled to or a part of antenna 2711. In some embodiments, WD 2710 may not include separate radio front end circuitry 2712; rather, processing circuitry 2720 can comprise radio front end circuitry and can be connected to antenna 2711. Similarly, in some embodiments, some or all of RF transceiver circuitry 2722 can be considered a part of interface 2714. Radio front end circuitry 2712 can receive digital data that is to be sent out to other network nodes or WDs via a wireless connection. Radio front end circuitry 2712 can convert the digital data into a radio signal having the appropriate channel and bandwidth parameters using a combination of filters 2718 and/or amplifiers 2716. The radio signal can then be transmitted via antenna 2711. Similarly, when receiving data, antenna 2711 can collect radio signals which are then converted into digital data by radio front end circuitry 2712. The digital data can be passed to processing circuitry 2720. In other embodiments, the interface can comprise different components and/or different combinations of components.

Processing circuitry 2720 can comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide WD 2710 functionality either alone or in combination with other WD 2710 components, such as device readable medium 2730. Such functionality can include any of the various wireless features or benefits discussed herein.

For example, processing circuitry 2720 can execute instructions stored in device readable medium 2730 or in memory within processing circuitry 2720 to provide the functionality disclosed herein. More specifically, instructions (also referred to as a computer program product) stored in medium 2730 can include instructions that, when executed by processor 2720, can configure wireless device 2710 to perform operations corresponding to various exemplary methods (e.g., procedures) described herein.

As illustrated, processing circuitry 2720 includes one or more of RF transceiver circuitry 2722, baseband processing circuitry 2724, and application processing circuitry 2726. In other embodiments, the processing circuitry can comprise different components and/or different combinations of components. In certain embodiments processing circuitry 2720 of WD 2710 can comprise a SOC. In some embodiments, RF transceiver circuitry 2722, baseband processing circuitry 2724, and application processing circuitry 2726 can be on separate chips or sets of chips. In alternative embodiments, part or all of baseband processing circuitry 2724 and application processing circuitry 2726 can be combined into one chip or set of chips, and RF transceiver circuitry 2722 can be on a separate chip or set of chips. In still alternative embodiments, part or all of RF transceiver circuitry 2722 and baseband processing circuitry 2724 can be on the same chip or set of chips, and application processing circuitry 2726 can be on a separate chip or set of chips. In yet other alternative embodiments, part or all of RF transceiver circuitry 2722, baseband processing circuitry 2724, and application processing circuitry 2726 can be combined in the same chip or set of chips. In some embodiments, RF transceiver circuitry 2722 can be a part of interface 2714. RF transceiver circuitry 2722 can condition RF signals for processing circuitry 2720.

In certain embodiments, some or all of the functionality described herein as being performed by a WD can be provided by processing circuitry 2720 executing instructions stored on device readable medium 2730, which in certain embodiments can be a computer-readable storage medium. In alternative embodiments, some or all of the functionality can be provided by processing circuitry 2720 without executing instructions stored on a separate or discrete device readable storage medium, such as in a hard-wired manner. In any of those particular embodiments, whether executing instructions stored on a device readable storage medium or not, processing circuitry 2720 can be configured to perform the described functionality. The benefits provided by such functionality are not limited to processing circuitry 2720 alone or to other components of WD 2710, but are enjoyed by WD 2710 as a whole, and/or by end users and the wireless network generally.

Processing circuitry 2720 can be configured to perform any determining, calculating, or similar operations (*e.g.,* certain obtaining operations) described herein as being performed by a WD. These operations, as performed by processing circuitry 2720, can include processing information obtained by processing circuitry 2720 by, for example, converting the obtained information into other information, comparing the obtained information or converted information to information stored by WD 2710, and/or performing one or more operations based on the obtained information or converted information, and as a result of said processing making a determination.

Device readable medium 2730 can be operable to store a computer program, software, an application including one or more of logic, rules, code, tables, *etc.* and/or other instructions capable of being executed by processing circuitry 2720. Device readable medium 2730 can include computer memory (*e.g.,* Random Access Memory (RAM) or Read Only Memory (ROM)), mass storage media *(*e*.g.,* a hard disk), removable storage media (*e.g.,* a Compact Disk (CD) or a Digital Video Disk (DVD)), and/or any other volatile or non-volatile, non-transitory device readable and/or computer executable memory devices that store information, data, and/or instructions that can be used by processing circuitry 2720. In some embodiments, processing circuitry 2720 and device readable medium 2730 can be considered to be integrated.

User interface equipment 2732 can include components that allow and/or facilitate a human user to interact with WD 2710. Such interaction can be of many forms, such as visual, audial, tactile, *etc.* User interface equipment 2732 can be operable to produce output to the user and to allow and/or facilitate the user to provide input to WD 2710. The type of interaction can vary depending on the type of user interface equipment 2732 installed in WD 2710. For example, if WD 2710 is a smart phone, the interaction can be via a touch screen; if WD 2710 is a smart meter, the interaction can be through a screen that provides usage (*e.g.,* the number of gallons used) or a speaker that provides an audible alert (*e.g.,* if smoke is detected). User interface equipment 2732 can include input interfaces, devices and circuits, and output interfaces, devices and circuits. User interface equipment 2732 can be configured to allow and/or facilitate input of information into WD 2710 and is connected to processing circuitry 2720 to allow and/or facilitate processing circuitry 2720 to process the input information. User interface equipment 2732 can include, for example, a microphone, a proximity or other sensor, keys/buttons, a touch display, one or more cameras, a USB port, or other input circuitry. User interface equipment 2732 is also configured to allow and/or facilitate output of information from WD 2710, and to allow and/or facilitate processing circuitry 2720 to output information from WD 2710. User interface equipment 2732 can include, for example, a speaker, a display, vibrating circuitry, a USB port, a headphone interface, or other output circuitry. Using one or more input and output interfaces, devices, and circuits, of user interface equipment 2732, WD 2710 can communicate with end users and/or the wireless network and allow and/or facilitate them to benefit from the functionality described herein.

Auxiliary equipment 2734 is operable to provide more specific functionality which may not be generally performed by WDs. This can comprise specialized sensors for doing measurements for various purposes, interfaces for additional types of communication such as wired communications *etc.* The inclusion and type of components of auxiliary equipment 2734 can vary depending on the embodiment and/or scenario.

Power source 2736 can, in some embodiments, be in the form of a battery or battery pack. Other types of power sources, such as an external power source (*e.g.,* an electricity outlet), photovoltaic devices or power cells, can also be used. WD 2710 can further comprise power circuitry 2737 for delivering power from power source 2736 to the various parts of WD 2710 which need power from power source 2736 to carry out any functionality described or indicated herein. Power circuitry 2737 can in certain embodiments comprise power management circuitry. Power circuitry 2737 can additionally or alternatively be operable to receive power from an external power source; in which case WD 2710 can be connectable to the external power source (such as an electricity outlet) via input circuitry or an interface such as an electrical power cable. Power circuitry 2737 can also in certain embodiments be operable to deliver power from an external power source to power source 2736. This can be, for example, for the charging of power source 2736. Power circuitry 2737 can perform any converting or other modification to the power from power source 2736 to make it suitable for supply to the respective components of WD 2710.

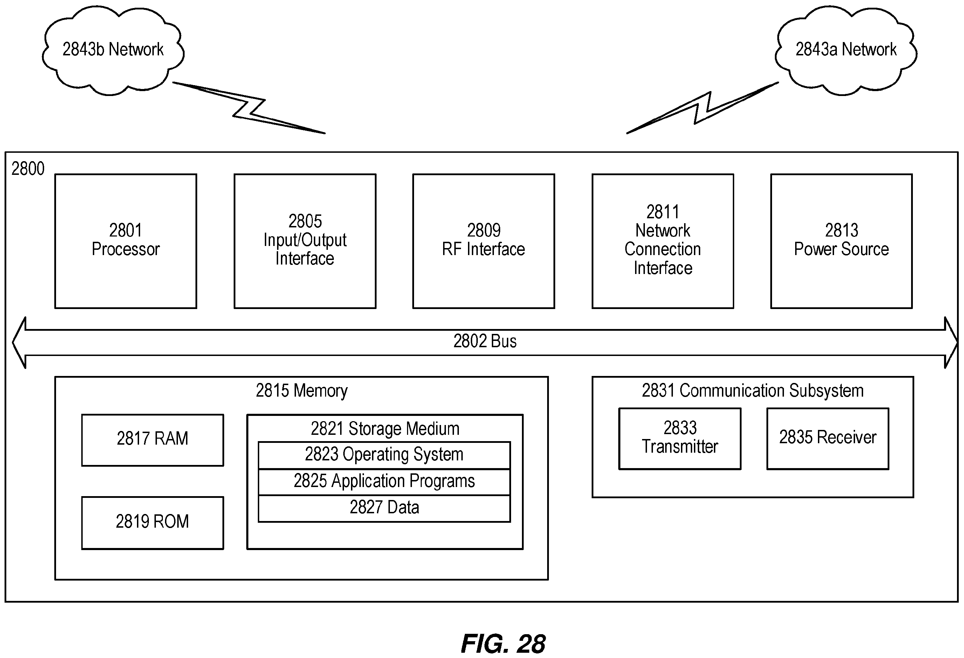

Figure 28 illustrates one embodiment of a UE in accordance with various aspects described herein. As used herein, a user equipment or UE may not necessarily have a user in the sense of a human user who owns and/or operates the relevant device. Instead, a UE can represent a device that is intended for sale to, or operation by, a human user but which may not, or which may not initially, be associated with a specific human user (*e.g.,* a smart sprinkler controller). Alternatively, a UE can represent a device that is not intended for sale to, or operation by, an end user but which can be associated with or operated for the benefit of a user (*e.g.,* a smart power meter). UE 28200 can be any UE identified by the 3^{rd} Generation Partnership Project (3GPP), including a NB-IoT UE, a machine type communication (MTC) UE, and/or an enhanced MTC (eMTC) UE. UE 2800, as illustrated in Figure 28, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE can be used interchangeable. Accordingly, although Figure 28 is a UE, the components discussed herein are equally applicable to a WD, and vice-versa.

In Figure 28, UE 2800 includes processing circuitry 2801 that is operatively coupled to input/output interface 2805, radio frequency (RF) interface 2809, network connection interface 2811, memory 2815 including random access memory (RAM) 2817, read-only memory (ROM) 2819, and storage medium 2821 or the like, communication subsystem 2831, power source 2833, and/or any other component, or any combination thereof. Storage medium 2821 includes operating system 2823, application program 2825, and data 2827. In other embodiments, storage medium 2821 can include other similar types of information. Certain UEs can utilize all of the components shown in Figure 28, or only a subset of the components. The level of integration between the components can vary from one UE to another UE. Further, certain UEs can contain multiple instances of a component, such as multiple processors, memories, transceivers, transmitters, receivers, *etc.*

In Figure 28, processing circuitry 2801 can be configured to process computer instructions and data. Processing circuitry 2801 can be configured to implement any sequential state machine operative to execute machine instructions stored as machine-readable computer programs in the memory, such as one or more hardware-implemented state machines (*e.g.,* in discrete logic, FPGA, ASIC, *etc*.); programmable logic together with appropriate firmware; one or more stored program, general-purpose processors, such as a microprocessor or Digital Signal Processor (DSP), together with appropriate software; or any combination of the above. For example, the processing circuitry 2801 can include two central processing units (CPUs). Data can be information in a form suitable for use by a computer.

In the depicted embodiment, input/output interface 2805 can be configured to provide a communication interface to an input device, output device, or input and output device. UE 2800 can be configured to use an output device via input/output interface 2805. An output device can use the same type of interface port as an input device. For example, a USB port can be used to provide input to and output from UE 2800. The output device can be a speaker, a sound card, a video card, a display, a monitor, a printer, an actuator, an emitter, a smartcard, another output device, or any combination thereof. UE 2800 can be configured to use an input device via input/output interface 2805 to allow and/or facilitate a user to capture information into UE 2800. The input device can include a touch-sensitive or presence-sensitive display, a camera (*e.g.,* a digital camera, a digital video camera, a web camera, *etc*.)*,* a microphone, a sensor, a mouse, a trackball, a directional pad, a trackpad, a scroll wheel, a smartcard, and the like. The presence-sensitive display can include a capacitive or resistive touch sensor to sense input from a user. A sensor can be, for instance, an accelerometer, a gyroscope, a tilt sensor, a force sensor, a magnetometer, an optical sensor, a proximity sensor, another like sensor, or any combination thereof. For example, the input device can be an accelerometer, a magnetometer, a digital camera, a microphone, and an optical sensor.

In Figure 28, RF interface 2809 can be configured to provide a communication interface to RF components such as a transmitter, a receiver, and an antenna. Network connection interface 2811 can be configured to provide a communication interface to network 2843a. Network 2843a can encompass wired and/or wireless networks such as a local-area network (LAN), a wide-area network (WAN), a computer network, a wireless network, a telecommunications network, another like network or any combination thereof. For example, network 2843a can comprise a Wi-Fi network. Network connection interface 2811 can be configured to include a receiver and a transmitter interface used to communicate with one or more other devices over a communication network according to one or more communication protocols, such as Ethernet, TCP/IP, SONET, ATM, or the like. Network connection interface 2811 can implement receiver and transmitter functionality appropriate to the communication network links (e.g., optical, electrical, and the like). The transmitter and receiver functions can share circuit components, software or firmware, or alternatively can be implemented separately.

RAM 2817 can be configured to interface via bus 2802 to processing circuitry 2801 to provide storage or caching of data or computer instructions during the execution of software programs such as the operating system, application programs, and device drivers. ROM 2819 can be configured to provide computer instructions or data to processing circuitry 2801. For example, ROM 2819 can be configured to store invariant low-level system code or data for basic system functions such as basic input and output (I/O), startup, or reception of keystrokes from a keyboard that are stored in a non-volatile memory. Storage medium 2821 can be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives.

In one example, storage medium 2821 can be configured to include operating system 2823; application program 2825 such as a web browser application, a widget or gadget engine or another application; and data file 2827. Storage medium 2821 can store, for use by UE 2800, any of a variety of various operating systems or combinations of operating systems. For example, application program 2825 can include executable program instructions (also referred to as a computer program product) that, when executed by processor 2801, can configure UE 2800 to perform operations corresponding to various exemplary methods (e.g., procedures) described herein.

Storage medium 2821 can be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 2821 can allow and/or facilitate UE 2800 to access computer-executable instructions, application programs or the like, stored on transitory or non-transitory memory media, to off-load data, or to upload data. An article of manufacture, such as one utilizing a communication system can be tangibly embodied in storage medium 2821, which can comprise a device readable medium.

In Figure 28, processing circuitry 2801 can be configured to communicate with network 2843b using communication subsystem 2831. Network 2843a and network 2843b can be the same network or networks or different network or networks. Communication subsystem 2831 can be configured to include one or more transceivers used to communicate with network 2843b. For example, communication subsystem 2831 can be configured to include one or more transceivers used to communicate with one or more remote transceivers of another device capable of wireless communication such as another WD, UE, or base station of a radio access network (RAN) according to one or more communication protocols, such as IEEE 802.28, CDMA, WCDMA, GSM, LTE, UTRAN, WiMax, or the like. Each transceiver can include transmitter 2833 and/or receiver 2835 to implement transmitter or receiver functionality, respectively, appropriate to the RAN links (*e.g.,* frequency allocations and the like). Further, transmitter 2833 and receiver 2835 of each transceiver can share circuit components, software or firmware, or alternatively can be implemented separately.

In the illustrated embodiment, the communication functions of communication subsystem 2831 can include data communication, voice communication, multimedia communication, short-range communications such as Bluetooth, near-field communication, location-based communication such as the use of the global positioning system (GPS) to determine a location, another like communication function, or any combination thereof. For example, communication subsystem 2831 can include cellular communication, Wi-Fi communication, Bluetooth communication, and GPS communication. Network 2843b can encompass wired and/or wireless networks such as a local-area network (LAN), a wide-area network (WAN), a computer network, a wireless network, a telecommunications network, another like network or any combination thereof. For example, network 2843b can be a cellular network, a Wi-Fi network, and/or a near-field network. Power source 2813 can be configured to provide alternating current (AC) or direct current (DC) power to components of UE 2800.

The features, benefits and/or functions described herein can be implemented in one of the components of UE 2800 or partitioned across multiple components of UE 2800. Further, the features, benefits, and/or functions described herein can be implemented in any combination of hardware, software or firmware. In one example, communication subsystem 2831 can be configured to include any of the components described herein. Further, processing circuitry 2801 can be configured to communicate with any of such components over bus 2802. In another example, any of such components can be represented by program instructions stored in memory that when executed by processing circuitry 2801 perform the corresponding functions described herein. In another example, the functionality of any of such components can be partitioned between processing circuitry 2801 and communication subsystem 2831. In another example, the non-computationally intensive functions of any of such components can be implemented in software or firmware and the computationally intensive functions can be implemented in hardware.

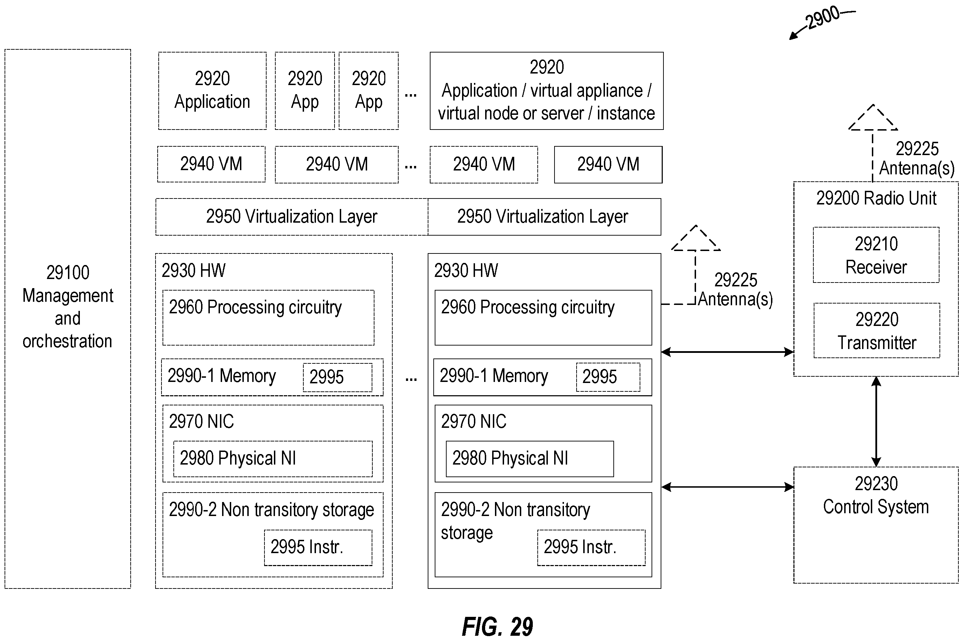

Figure 29 is a schematic block diagram illustrating a virtualization environment 2900 in which functions implemented by some embodiments can be virtualized. In the present context, virtualizing means creating virtual versions of apparatuses or devices which can include virtualizing hardware platforms, storage devices and networking resources. As used herein, virtualization can be applied to a node (*e.g.,* a virtualized base station or a virtualized radio access node) or to a device (*e.g.,* a UE, a wireless device or any other type of communication device) or components thereof and relates to an implementation in which at least a portion of the functionality is implemented as one or more virtual components (*e.g.,* via one or more applications, components, functions, virtual machines or containers executing on one or more physical processing nodes in one or more networks).

In some embodiments, some or all of the functions described herein can be implemented as virtual components executed by one or more virtual machines implemented in one or more virtual environments 2900 hosted by one or more of hardware nodes 2930. Further, in embodiments in which the virtual node is not a radio access node or does not require radio connectivity (*e.g.,* a core network node), then the network node can be entirely virtualized.

The functions can be implemented by one or more applications 2920 (which can alternatively be called software instances, virtual appliances, network functions, virtual nodes, virtual network functions, *etc.*) operative to implement some of the features, functions, and/or benefits of some of the embodiments disclosed herein. Applications 2920 are run in virtualization environment 2900 which provides hardware 2930 comprising processing circuitry 2960 and memory 2990. Memory 2990 contains instructions 2995 executable by processing circuitry 2960 whereby application 2920 is operative to provide one or more of the features, benefits, and/or functions disclosed herein.

Virtualization environment 2900 can include general-purpose or special-purpose network hardware devices (or nodes) 2930 comprising a set of one or more processors or processing circuitry 2960, which can be commercial off-the-shelf (COTS) processors, dedicated Application Specific Integrated Circuits (ASICs), or any other type of processing circuitry including digital or analog hardware components or special purpose processors. Each hardware device can comprise memory 2990-1 which can be non-persistent memory for temporarily storing instructions 2995 or software executed by processing circuitry 2960. For example, instructions 2995 can include program instructions (also referred to as a computer program product) that, when executed by processing circuitry 2960, can configure hardware node 2920 to perform operations corresponding to various exemplary methods (e.g., procedures) described herein. Such operations can also be attributed to virtual node(s) 2920 that is/are hosted by hardware node 2930.

Each hardware device can comprise one or more network interface controllers (NICs) 2970, also known as network interface cards, which include physical network interface 2980. Each hardware device can also include non-transitory, persistent, machine-readable storage media 2990-2 having stored therein software 2995 and/or instructions executable by processing circuitry 2960. Software 2995 can include any type of software including software for instantiating one or more virtualization layers 2950 (also referred to as hypervisors), software to execute virtual machines 2940 as well as software allowing it to execute functions, features and/or benefits described in relation with some embodiments described herein.

Virtual machines 2940, comprise virtual processing, virtual memory, virtual networking or interface and virtual storage, and can be run by a corresponding virtualization layer 2950 or hypervisor. Different embodiments of the instance of virtual appliance 2920 can be implemented on one or more of virtual machines 2940, and the implementations can be made in different ways.

During operation, processing circuitry 2960 executes software 2995 to instantiate the hypervisor or virtualization layer 2950, which can sometimes be referred to as a virtual machine monitor (VMM). Virtualization layer 2950 can present a virtual operating platform that appears like networking hardware to virtual machine 2940.

As shown in Figure 29, hardware 2930 can be a standalone network node with generic or specific components. Hardware 2930 can comprise antenna 29225 and can implement some functions via virtualization. Alternatively, hardware 2930 can be part of a larger cluster of hardware (e.g., such as in a data center or customer premise equipment (CPE)) where many hardware nodes work together and are managed via management and orchestration (MANO) 29100, which, among others, oversees lifecycle management of applications 2920.

Virtualization of the hardware is in some contexts referred to as network function virtualization (NFV). NFV can be used to consolidate many network equipment types onto industry standard high-volume server hardware, physical switches, and physical storage, which can be located in data centers, and customer premise equipment.

In the context of NFV, virtual machine 2940 can be a software implementation of a physical machine that runs programs as if they were executing on a physical, non-virtualized machine. Each of virtual machines 2940, and that part of hardware 2930 that executes that virtual machine, be it hardware dedicated to that virtual machine and/or hardware shared by that virtual machine with others of the virtual machines 2940, forms a separate virtual network elements (VNE).

Still in the context of NFV, Virtual Network Function (VNF) is responsible for handling specific network functions that run in one or more virtual machines 2940 on top of hardware networking infrastructure 2930 and corresponds to application 2920 in Figure 29.

In some embodiments, one or more radio units 29200 that each include one or more transmitters 29220 and one or more receivers 29210 can be coupled to one or more antennas 29225. Radio units 29200 can communicate directly with hardware nodes 2930 via one or more appropriate network interfaces and can be used in combination with the virtual components to provide a virtual node with radio capabilities, such as a radio access node or a base station. Nodes arranged in this manner can also communicate with one or more UEs, such as described elsewhere herein.

In some embodiments, some signaling can be performed via control system 29230, which can alternatively be used for communication between the hardware nodes 2930 and radio units 29200.

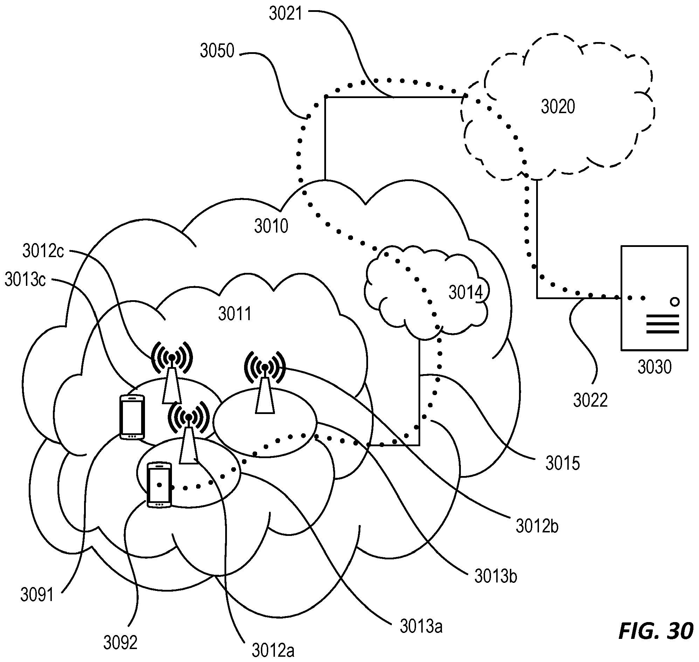

With reference to Figure 30, in accordance with an embodiment, a communication system includes telecommunication network 3010, such as a 3GPP-type cellular network, which comprises access network 3011, such as a radio access network, and core network 3014. Access network 3011 comprises a plurality of base stations 3012a, 3012b, 3012c, such as NBs, eNBs, gNBs or other types of wireless access points, each defining a corresponding coverage area 3013a, 3013b, 3013c. Each base station 3012a, 3012b, 3012c is connectable to core network 3014 over a wired or wireless connection 3015. A first UE 3091 located in coverage area 3013c can be configured to wirelessly connect to, or be paged by, the corresponding base station 3012c. A second UE 3092 in coverage area 3013a is wirelessly connectable to the corresponding base station 3012a. While a plurality of UEs 3091, 3092 are illustrated in this example, the disclosed embodiments are equally applicable to a situation where a sole UE is in the coverage area or where a sole UE is connecting to the

Telecommunication network 3010 is itself connected to host computer 3030, which can be embodied in the hardware and/or software of a standalone server, a cloud-implemented server, a distributed server or as processing resources in a server farm. Host computer 3030 can be under the ownership or control of a service provider or can be operated by the service provider or on behalf of the service provider. Connections 3021 and 3022 between telecommunication network 3010 and host computer 3030 can extend directly from core network 3014 to host computer 3030 or can go via an optional intermediate network 3020. Intermediate network 3020 can be one of, or a combination of more than one of, a public, private or hosted network; intermediate network 3020, if any, can be a backbone network or the Internet; in particular, intermediate network 3020 can comprise two or more sub-networks (not shown).

The communication system of Figure 30 as a whole enables connectivity between the connected UEs 3091, 3092 and host computer 3030. The connectivity can be described as an over-the-top (OTT) connection 3050. Host computer 3030 and the connected UEs 3091, 3092 are configured to communicate data and/or signaling via OTT connection 3050, using access network 3011, core network 3014, any intermediate network 3020 and possible further infrastructure (not shown) as intermediaries. OTT connection 3050 can be transparent in the sense that the participating communication devices through which OTT connection 3050 passes are unaware of routing of uplink and downlink communications. For example, base station 3012 may not or need not be informed about the past routing of an incoming downlink communication with data originating from host computer 3030 to be forwarded (*e.g.,* handed over) to a connected UE 3091. Similarly, base station 3012 need not be aware of the future routing of an outgoing uplink communication originating from the UE 3091 towards the host computer 3030.

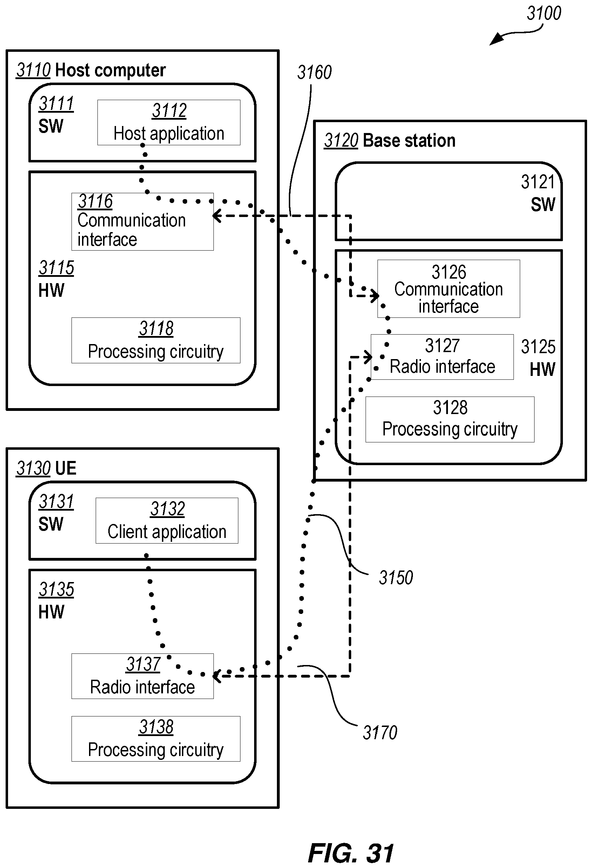

Example implementations, in accordance with an embodiment, of the UE, base station and host computer discussed in the preceding paragraphs will now be described with reference to Figure 31. In communication system 3100, host computer 3110 comprises hardware 3115 including communication interface 3116 configured to set up and maintain a wired or wireless connection with an interface of a different communication device of communication system 3100. Host computer 3110 further comprises processing circuitry 3118, which can have storage and/or processing capabilities. In particular, processing circuitry 3118 can comprise one or more programmable processors, application-specific integrated circuits, field programmable gate arrays or combinations of these (not shown) adapted to execute instructions. Host computer 3110 further comprises software 3111, which is stored in or accessible by host computer 3110 and executable by processing circuitry 3118. Software 3111 includes host application 3112. Host application 3112 can be operable to provide a service to a remote user, such as UE 3130 connecting via OTT connection 3150 terminating at UE 3130 and host computer 3110. In providing the service to the remote user, host application 3112 can provide user data which is transmitted using OTT connection 3150.

Communication system 3100 can also include base station 3120 provided in a telecommunication system and comprising hardware 3125 enabling it to communicate with host computer 3110 and with UE 3130. Hardware 3125 can include communication interface 3126 for setting up and maintaining a wired or wireless connection with an interface of a different communication device of communication system 3100, as well as radio interface 3127 for setting up and maintaining at least wireless connection 3170 with UE 3130 located in a coverage area (not shown in Figure 31) served by base station 3120. Communication interface 3126 can be configured to facilitate connection 3160 to host computer 3110. Connection 3160 can be direct, or it can pass through a core network (not shown in Figure 31) of the telecommunication system and/or through one or more intermediate networks outside the telecommunication system. In the embodiment shown, hardware 3125 of base station 3120 can also include processing circuitry 3128, which can comprise one or more programmable processors, application-specific integrated circuits, field programmable gate arrays or combinations of these (not shown) adapted to execute instructions.

Base station 3120 also includes software 3121 stored internally or accessible via an external connection. For example, software 3121 can include program instructions (also referred to as a computer program product) that, when executed by processing circuitry 3128, can configure base station 3120 to perform operations corresponding to various exemplary methods (e.g., procedures) described herein.

Communication system 3100 can also include UE 3130 already referred to, whose hardware 3135 can include radio interface 3137 configured to set up and maintain wireless connection 3170 with a base station serving a coverage area in which UE 3130 is currently located. Hardware 3135 of UE 3130 can also include processing circuitry 3138, which can comprise one or more programmable processors, application-specific integrated circuits, field programmable gate arrays or combinations of these (not shown) adapted to execute instructions.

UE 3130 also includes software 3128, which is stored in or accessible by UE 3130 and executable by processing circuitry 3138. Software 3128 includes client application 3132. Client application 3132 can be operable to provide a service to a human or non-human user via UE 3130, with the support of host computer 3110. In host computer 3110, an executing host application 3112 can communicate with the executing client application 3132 via OTT connection 3150 terminating at UE 3130 and host computer 3110. In providing the service to the user, client application 3132 can receive request data from host application 3112 and provide user data in response to the request data. OTT connection 3150 can transfer both the request data and the user data. Client application 3132 can interact with the user to generate the user data that it provides. Software 3128 can also include program instructions (also referred to as a computer program product) that, when executed by processing circuitry 3138, can configure UE 3130 to perform operations corresponding to various exemplary methods (e.g., procedures) described herein.

As an example, host computer 3110, base station 3120 and UE 3130 illustrated in Figure 31 can be similar or identical to host computer 2730, one of base stations 2712a, 2712b, 2712c and one of UEs 2791, 2792 of Figure 27, respectively. This is to say, the inner workings of these entities can be as shown in Figure 31 and independently, the surrounding network topology can be that of Figure 27.

In Figure 31, OTT connection 3150 has been drawn abstractly to illustrate the communication between host computer 3110 and UE 3130 via base station 3120, without explicit reference to any intermediary devices and the precise routing of messages via these devices. Network infrastructure can determine the routing, which it can be configured to hide from UE 3130 or from the service provider operating host computer 3110, or both. While OTT connection 3150 is active, the network infrastructure can further take decisions by which it dynamically changes the routing (*e.g.,* on the basis of load balancing consideration or reconfiguration of the network).

Wireless connection 3170 between UE 3130 and base station 3120 is in accordance with the teachings of the embodiments described throughout this disclosure. One or more of the various embodiments improve the performance of OTT services provided to UE 3130 using OTT connection 3150, in which wireless connection 3170 forms the last segment. More precisely, the embodiments disclosed herein can improve flexibility for the network to monitor end-to-end quality-of-service (QoS) of data flows, including their corresponding radio bearers, associated with data sessions between a user equipment (UE) and another entity, such as an OTT data application or service external to the 5G network. These and other advantages can facilitate more timely design, implementation, and deployment of 5G/NR solutions. Furthermore, such embodiments can facilitate flexible and timely control of data session QoS, which can lead to improvements in capacity, throughput, latency, *etc.* that are envisioned by 5G/NR and important for the growth of OTT services.

A measurement procedure can be provided for the purpose of monitoring data rate, latency and other network operational aspects on which the one or more embodiments improve. There can further be an optional network functionality for reconfiguring OTT connection 3150 between host computer 3110 and UE 3130, in response to variations in the measurement results. The measurement procedure and/or the network functionality for reconfiguring OTT connection 3150 can be implemented in software 3111 and hardware 3115 of host computer 3110 or in software 3128 and hardware 3135 of UE 3130, or both. In embodiments, sensors (not shown) can be deployed in or in association with communication devices through which OTT connection 3150 passes; the sensors can participate in the measurement procedure by supplying values of the monitored quantities exemplified above or by supplying values of other physical quantities from which software 3111, 3128 can compute or estimate the monitored quantities. The reconfiguring of OTT connection 3150 can include message format, retransmission settings, preferred routing *etc*.; the reconfiguring need not affect base station 3120, and it can be unknown or imperceptible to base station 3120. Such procedures and functionalities can be known and practiced in the art. In certain embodiments, measurements can involve proprietary UE signaling facilitating host computer 3110's measurements of throughput, propagation times, latency and the like. The measurements can be implemented in that software 3111 and 3128 causes messages to be transmitted, in particular empty or 'dummy' messages, using OTT connection 3150 while it monitors propagation times, errors, *etc.*

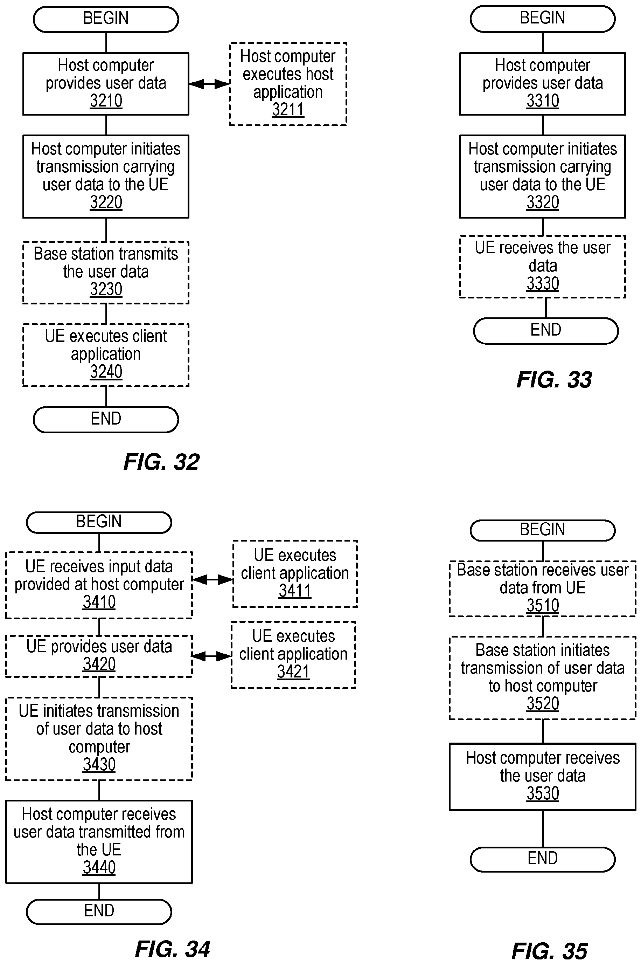

Figure 32 is a flowchart illustrating an exemplary method (e.g., procedure) implemented in a communication system, in accordance with various embodiments. The communication system includes a host computer, a base station and a UE which, in some embodiments, can be those described with reference to other figures herein. For simplicity of the present disclosure, only drawing references to Figure 32 will be included in this section. In step 3210, the host computer provides user data. In substep 3211 (which can be optional) of step 3210, the host computer provides the user data by executing a host application. In step 3220, the host computer initiates a transmission carrying the user data to the UE. In step 3230 (which can be optional), the base station transmits to the UE the user data which was carried in the transmission that the host computer initiated, in accordance with the teachings of the embodiments described throughout this disclosure. In step 3240 (which can also be optional), the UE executes a client application associated with the host application executed by the host computer.

Figure 33 is a flowchart illustrating an exemplary method (e.g., procedure) implemented in a communication system, in accordance with various embodiments. The communication system includes a host computer, a base station and a UE which can be those described with reference to other figures herein. For simplicity of the present disclosure, only drawing references to Figure 33 will be included in this section. In step 3310 of the method, the host computer provides user data. In an optional substep (not shown) the host computer provides the user data by executing a host application. In step 3320, the host computer initiates a transmission carrying the user data to the UE. The transmission can pass via the base station, in accordance with the teachings of the embodiments described throughout this disclosure. In step 3330 (which can be optional), the UE receives the user data carried in the transmission.

Figure 34 is a flowchart illustrating an exemplary method (e.g., procedure) implemented in a communication system, in accordance with various embodiments. The communication system includes a host computer, a base station and a UE which can be those described with reference to other figures herein. For simplicity of the present disclosure, only drawing references to Figure 34 will be included in this section. In step 3410 (which can be optional), the UE receives input data provided by the host computer. Additionally or alternatively, in step 3420, the UE provides user data. In substep 3421 (which can be optional) of step 3420, the UE provides the user data by executing a client application. In substep 3411 (which can be optional) of step 3410, the UE executes a client application which provides the user data in reaction to the received input data provided by the host computer. In providing the user data, the executed client application can further consider user input received from the user. Regardless of the specific manner in which the user data was provided, the UE initiates, in substep 3430 (which can be optional), transmission of the user data to the host computer. In step 3440 of the method, the host computer receives the user data transmitted from the UE, in accordance with the teachings of the embodiments described throughout this disclosure.

Figure 35 is a flowchart illustrating an exemplary method (e.g., procedure) implemented in a communication system, in accordance with various embodiments. The communication system includes a host computer, a base station and a UE which can be those described with reference to other figures herein. For simplicity of the present disclosure, only drawing references to Figure 35 will be included in this section. In step 3510 (which can be optional), in accordance with the teachings of the embodiments described throughout this disclosure, the base station receives user data from the UE. In step 3520 (which can be optional), the base station initiates transmission of the received user data to the host computer. In step 3530 (which can be optional), the host computer receives the user data carried in the transmission initiated by the base station.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, can be used synonymously in certain instances (*e.g.,* "data" and "information"). It should be understood, that although these terms (and/or other terms that can be synonymous to one another) can be used synonymously herein, there can be instances when such words can be intended to not be used synonymously.

## Claims

1. A method for a user equipment, UE, configured with a master cell group, MCG, and a secondary cell group, SCG, in a wireless network, the method comprising:
determining (2420) availability of uplink, UL, data for transmission via the SCG;
calculating (2435) an available UL data volume;
determining if the SCG is in activated or deactivated state;
transmitting a Buffer Status Report, BSR in the SCG if the SCG is in activated state, otherwise,
if the SCG is in deactivated state, transmitting (2440) an RRC *UEAssistanceInformation* message including an indication that UL data is available for transmission via the SCG to the wireless network via the MCG.

2. The method of claim 1, further comprising:
receiving (2410), from a first node configured to provide the MCG, a first indication that the SCG should be deactivated; and
deactivating (2415) the SCG in response to the first indication.

3. The method of claim 2, wherein deactivating (2415) the SCG further comprises stopping or pausing (2416) one or more timers associated with periodic reporting of available UL data volume associated with the SCG.

4. The method of any of claims 1-3, wherein transmitting (2440) the indication that UL data is available for transmission via the SCG comprises:
receiving (2443), from a second node configured to provide the SCG, an UL grant for transmission of a buffer status report, BSR; and
transmitting (2445) the BSR indicating an available UL data volume to the second node via the SCG, using the received UL grant.

5. The method of claim 4, wherein:
transmitting (2440) the indication that UL data is available for transmission via the SCG further comprises sending (2442) a scheduling request, SR, to the second node;
the UL grant is received in response to the SR; and
one of the following applies:
the SR and the BSR are transmitted while the SCG is in the deactivated state;
the SR is transmitted while the SCG is in the deactivated state and the BSR is transmitted after activating the SCG; or
the SR and the BSR are transmitted after activating the SCG.

6. The method of claim 5, wherein:
the UL grant includes a second indication that the SCG should be activated; and
transmitting (2440) the indication that UL data is available for transmission via the SCG further comprises activating (2444) the SCG in response to the second indication and before transmitting (2445) the BSR.

7. The method of claim 4, wherein:
the UL grant is a configured UL grant for use while the SCG is in the deactivated state; and
the configured UL grant is received from the second node before the SCG was deactivated.

8. The method of any of claims 1-4, further comprising activating (2425) the SCG based on determining (2420) the availability of the UL data.

9. The method of claim 8, further comprising initiating (2430) a timer in response to activating (2425) the SCG.

10. The method of claim 9, further comprising deactivating (2470) the SCG upon expiration of the timer after reporting that UL data is available for transmission via the SCG.

11. The method of any of claims 9-10, further comprising:
before expiration of the timer, receiving (2450) one of the following from a second node that is configured to provide the SCG:
a third indication that the SCG should be activated, or
a fourth indication that the SCG should be deactivated; and
stopping the timer (2460) in response to the third indication or the fourth indication.

12. The method of any of claims 1-11, further comprising:
receiving (2480), from a first node configured to provide the MCG, in response to the indication that UL data is available for transmission via the SCG, a fifth indication that the SCG should be activated; and
activating (2490) the SCG in response to the fifth indication.

13. The method of any of claims 1-12, wherein calculating the available UL data volume is based on one or more of the following:
a type of bearer associated with the available UL data;
whether MCG or SCG has been configured as a packet data convergence protocol, PDCP, primary path; and
whether PDCP duplication is enabled.

14. The method of any of claims 1-13, wherein:
transmitting (2440) the indication that UL data is available for transmission via the SCG is based on determining (2441) that the available UL data volume is greater than a first threshold applicable when the SCG is in the deactivated state; and
the first threshold is different from a second threshold applicable when the SCG is in an activated state.

15. A method for a first node configured to provide a master cell group, MCG, for a user equipment, UE, that is also configured with a secondary cell group, SCG, in a wireless network, the method comprising:
receiving (2620), from the UE while the SCG is in a deactivated state, an RRC *UEAssistanceInformation* message including an indication that uplink, UL, data is available for transmission via the SCG; and
transmitting (2630) the indication that UL data is available for transmission via the SCG to a second node configured to provide the SCG.

16. The method of claim 15, further comprising:
receiving (2640), from the second node in response to the indication that UL data is available for transmission via the SCG, a second indication that the SCG should be activated; and
transmitting (2650) the second indication to the UE.

17. A user equipment, UE (120, 505, 605, 1710, 3010, 3100, 3430) configured with a master cell group, MCG, and a secondary cell group, SCG, in a wireless network (100, 399, 599, 699, 2843), the UE being further configured to:
determine availability of uplink, UL, data for transmission via the SCG;
calculate an available UL data volume;
determine if the SCG is in activated or deactivated state;
transmit a Buffer Status Report, BSR in the SCG if the SCG is in activated state;
otherwise
if the SCG is in deactivated state, transmit an RRC *UEAssistanceInformation* message including an indication that UL data is available for transmission via the SCG to the wireless network via the MCG.

18. The UE of claim 17, being further configured to perform operations corresponding to any of the methods of claims 2-14.

19. A computer program product (2825, 3131) comprising computer-executable instructions that, when executed by processing circuitry (2720, 2801, 3138) of a user equipment, UE (120, 505, 605, 1710, 3010, 3100, 3430) configured with a master cell group, MCG, and a secondary cell group, SCG, in a wireless network (100, 399, 599, 699, 2843), configure the UE to perform operations corresponding to any of the methods of claims 1-14.

20. A first node (105, 110, 115, 300, 350, 510, 520, 610, 620, 1720, 2760, 2930, 3120) configured to provide a master cell group, MCG, for a user equipment, UE (120, 505, 605, 1710, 3010, 3100, 3430) that is also configured with a secondary cell group, SCG, in a wireless network (100, 399, 599, 699, 2843), the first node being further configured to:
receive, from the UE while the SCG is in a deactivated state, an RRC *UEAssistanceInformation* message including an indication that UL data is available for transmission via the SCG; and
transmit the indication that UL data is available for transmission via the SCG to a second node configured to provide the SCG.

21. The first node of claim 20, being further configured to perform operations corresponding to the method of claims 16.

22. A computer program product (2995, 3121) comprising computer-executable instructions that, when executed by processing circuitry (2770, 2960, 3128) of a first node (105, 110, 115, 300, 350, 510, 520, 610, 620, 1720, 2760, 2930, 3120) configured to provide a master cell group, MCG, for a user equipment, UE (120, 505, 605, 1710, 3010, 3100, 3430) in a wireless network (100, 399, 599, 699, 2843), configure the first node to perform operations corresponding to any of the methods of claims 15-16.

## Patentansprüche

1. Verfahren für eine Benutzereinrichtung, UE, die mit einer Masterzellengruppe, MCG, und einer Sekundärzellengruppe, SCG, in einem drahtlosen Netz konfiguriert ist, wobei das Verfahren Folgendes umfasst:
Bestimmen (2420) einer Verfügbarkeit von Uplink-Daten, UL-Daten, zur Übertragung über die SCG;
Berechnen (2435) eines verfügbaren UL-Datenvolumens;
Bestimmen, ob sich die SCG in einem aktivierten oder einem deaktivierten Zustand befindet;
Übertragen einer Pufferstatusmeldung, BSR, in der SCG, wenn sich die SCG in dem aktivierten Zustand befindet, sonst,
wenn sich die SCG in dem deaktivierten Zustand befindet, Übertragen (2440) einer RRC-UEAssistanceInformation-Nachricht, die eine Angabe beinhaltet, dass UL-Daten zur Übertragung über die SCG verfügbar sind, an das drahtlose Netz über die MCG.

2. Verfahren nach Anspruch 1, ferner umfassend:
Empfangen (2410), von einem ersten Knoten, der dazu konfiguriert ist, die MCG bereitzustellen, einer ersten Angabe, dass die SCG zu deaktivieren ist; und
Deaktivieren (2415) der SCG als Reaktion auf die erste Angabe.

3. Verfahren nach Anspruch 2, wobei das Deaktivieren (2415) der SCG ferner Stoppen oder Anhalten (2416) eines oder mehrerer Timer umfasst, die mit einer periodischen Meldung zu verfügbarem UL-Datenvolumen assoziiert sind, das mit der SCG assoziiert ist.

4. Verfahren nach einem der Ansprüche 1-3, wobei das Übertragen (2440) der Angabe, dass UL-Daten zur Übertragung über die SCG verfügbar sind, Folgendes umfasst:
Empfangen (2443), von einem zweiten Knoten, der dazu konfiguriert ist, die SCG bereitzustellen, einer UL-Gewährung zur Übertragung einer Pufferstatusmeldung, BSR; und
Übertragen (2445) der BSR, die ein verfügbares UL-Datenvolumen angibt, an den zweiten Knoten über die SCG unter Verwendung der empfangenen UL-Gewährung.

5. Verfahren nach Anspruch 4, wobei:
das Übertragen (2440) der Angabe, dass UL-Daten zur Übertragung über die SCG verfügbar sind, ferner Senden (2442) einer Planungsanforderung, SR, an den zweiten Knoten umfasst;
die UL-Gewährung als Reaktion auf die SR empfangen wird; und
eines von Folgendem zutrifft:
die SR und die BSR werden übertragen, während sich die SCG in dem deaktivierten Zustand befindet;
die SR wird übertragen, während sich die SCG in dem deaktivierten Zustand befindet und die BSR wird nach Aktivieren der SCG übertragen; oder
die SR und die BSR werden nach Aktivieren der SCG übertragen.

6. Verfahren nach Anspruch 5, wobei:
die UL-Gewährung eine zweite Angabe beinhaltet, dass die SCG zu aktivieren ist; und
das Übertragen (2440) der Angabe, dass UL-Daten zur Übertragung über die SCG verfügbar sind, ferner Aktivieren (2444) der SCG als Reaktion auf die zweite Angabe und vor dem Übertragen (2445) der BSR umfasst.

7. Verfahren nach Anspruch 4, wobei:
die UL-Gewährung eine konfigurierte UL-Gewährung zur Verwendung, während sich die SCG in dem deaktivierten Zustand befindet, ist; und
die konfigurierte UL-Gewährung von dem zweiten Knoten empfangen wird, bevor die SCG deaktiviert wurde.

8. Verfahren nach einem der Ansprüche 1-4, ferner umfassend Aktivieren (2425) der SCG basierend auf dem Bestimmen (2420) der Verfügbarkeit der UL-Daten.

9. Verfahren nach Anspruch 8, ferner umfassend Initiieren (2430) eines Timers als Reaktion auf das Aktivieren (2425) der SCG.

10. Verfahren nach Anspruch 9, ferner umfassend Deaktivieren (2470) der SCG bei Ablaufen des Timers nach der Meldung, dass UL-Daten zur Übertragung über die SCG verfügbar sind.

11. Verfahren nach einem der Ansprüche 9-10, ferner umfassend:
vor dem Ablaufen des Timers Empfangen (2450) eines der Folgenden von einem zweiten Knoten, der dazu konfiguriert ist, die SCG bereitzustellen:
eine dritte Angabe, dass die SCG zu aktivieren ist, oder
eine vierte Angabe, dass die SCG zu deaktivieren ist, und
Stoppen des Timers (2460) als Reaktion auf die dritte Angabe oder die vierte Angabe.

12. Verfahren nach einem der Ansprüche 1-11, ferner umfassend:
Empfangen (2480), von einem ersten Knoten, der dazu konfiguriert ist, die MCG bereitzustellen, als Reaktion auf die Angabe, dass UL-Daten zur Übertragung über die SCG verfügbar sind, einer fünften Angabe, dass die SCG zu aktivieren ist; und
Aktivieren (2490) der SCG als Reaktion auf die fünfte Angabe.

13. Verfahren nach einem der Ansprüche 1-12, wobei das Berechnen des verfügbaren UL-Datenvolumens auf einem oder mehreren von Folgendem basiert:
einem Typ von Träger, der mit den verfügbaren UL-Daten assoziiert ist;
ob die MCG oder die SCG als ein primärer Paketdatenkonvergenzprotokollpfad, primärer PDCP-Pfad, konfiguriert worden ist; und
ob PDCP-Duplizierung ermöglicht ist.

14. Verfahren nach einem der Ansprüche 1-13, wobei:
das Übertragen (2440) der Angabe, dass UL-Daten zur Übertragung über die SCG verfügbar sind, auf Bestimmen (2441) basiert, dass das verfügbare UL-Datenvolumen größer als ein erster Schwellenwert ist, der zutrifft, wenn sich die SCG in dem deaktivierten Zustand befindet; und
sich der erste Schwellenwert von einem zweiten Schwellenwert unterscheidet, der zutrifft, wenn sich die SCG in einem aktivierten Zustand befindet.

15. Verfahren für einen ersten Knoten, der dazu konfiguriert ist, eine Masterzellengruppe, MCG, für eine Benutzereinrichtung, UE, bereitzustellen, die ebenfalls mit einer Sekundärzellengruppe, SCG, in einem drahtlosen Netz konfiguriert ist, wobei das Verfahren Folgendes umfasst:
Empfangen (2620), von der UE, während sich die SCG in einem deaktivierten Zustand befindet, einer RRC-UEAssistanceInformation-Nachricht, die eine Angabe beinhaltet, dass Uplink-Daten, UL-Daten, zur Übertragung über die SCG verfügbar sind; und
Übertragen (2630) der Angabe, dass UL-Daten zur Übertragung über die SCG verfügbar sind, an einen zweiten Knoten, der dazu konfiguriert ist, die SCG bereitzustellen.

16. Verfahren nach Anspruch 15, ferner umfassend:
Empfangen (2640), von dem zweiten Knoten als Reaktion auf die Angabe, dass UL-Daten zur Übertragung über die SCG verfügbar sind, einer zweiten Angabe, dass die SCG zu aktivieren ist; und
Übertragen (2650) der zweiten Angabe an die UE.

17. Benutzereinrichtung, UE, (120, 505, 605, 1710, 3010, 3100, 3430) die mit einer Masterzellengruppe, MCG, und einer Sekundärzellengruppe, SCG, in einem drahtlosen Netz (100, 399, 599, 699, 2843) konfiguriert ist, wobei die UE ferner zu Folgendem konfiguriert ist:
Bestimmen einer Verfügbarkeit von Uplink-Daten, UL-Daten, zur Übertragung über die SCG;
Berechnen eines verfügbaren UL-Datenvolumens;
Bestimmen, ob sich die SCG in einem aktivierten oder einem deaktivierten Zustand befindet;
Übertragen einer Pufferstatusmeldung, BSR, in der SCG, wenn sich die SCG in dem aktivierten Zustand befindet; sonst,
wenn sich die SCG in dem deaktivierten Zustand befindet, Übertragen einer RRC-UEAssistanceInformation-Nachricht, die eine Angabe beinhaltet, dass UL-Daten zur Übertragung über die SCG verfügbar sind, an das drahtlose Netz über die MCG.

18. UE nach Anspruch 17, die ferner dazu konfiguriert ist, Vorgänge durchzuführen, die einem der Verfahren nach Anspruch 2-14 entsprechen.

19. Computerprogrammprodukt (2825, 3131), umfassend computerausführbare Anweisungen, die, wenn sie durch eine Verarbeitungsschaltung (2720, 2801, 3138) einer Benutzereinrichtung, UE, (120, 505, 605, 1710, 3010, 3100, 3430) ausgeführt werden, die mit einer Masterzellengruppe, MCG, und einer Sekundärzellengruppe, SCG, in einem drahtlosen Netz (100, 399, 599, 699, 2843) konfiguriert ist, die UE dazu konfigurieren, Vorgänge durchzuführen, die einem der Verfahren nach Anspruch 1-14 entsprechen.

20. Erster Knoten (105, 110, 115, 300, 350, 510, 520, 610, 620, 1720, 2760, 2930, 3120), der dazu konfiguriert ist, eine Masterzellengruppe, MCG, für eine Benutzereinrichtung, UE, (120, 505, 605, 1710, 3010, 3100, 3430), die ebenfalls mit einer Sekundärzellengruppe, SCG, konfiguriert ist, in einem drahtlosen Netz (100, 399, 599, 699, 2843) bereitzustellen, wobei der erste Knoten ferner zu Folgendem konfiguriert ist:
Empfangen, von der UE, während sich die SCG in einem deaktivierten Zustand befindet, einer RRC-UEAssistanceInformation-Nachricht, die eine Angabe beinhaltet, dass UL-Daten zur Übertragung über die SCG verfügbar sind; und
Übertragen der Angabe, dass UL-Daten zur Übertragung über die SCG verfügbar sind, an einen zweiten Knoten, der dazu konfiguriert ist, die SCG bereitzustellen.

21. Erster Knoten nach Anspruch 20, der ferner dazu konfiguriert ist, Vorgänge durchzuführen, die dem Verfahren nach Anspruch 16 entsprechen.

22. Computerprogrammprodukt (2995, 3121), umfassend computerausführbare Anweisungen, die wenn sie durch eine Verarbeitungsschaltung (2770, 2960, 3128) eines ersten Knotens (105, 110, 115, 300, 350, 510, 520, 610, 620, 1720, 2760, 2930, 3120) ausgeführt werden, der dazu konfiguriert ist, eine Masterzellengruppe, MCG, für eine Benutzereinrichtung, UE, (120, 505, 605, 1710, 3010, 3100, 3430) in einem drahtlosen Netz (100, 399, 599, 699, 2843) bereitzustellen, den ersten Knoten dazu konfigurieren, Vorgänge durchzuführen, die einem der Verfahren nach Anspruch 15-16 entsprechen.

## Revendications

1. Procédé pour un équipement utilisateur, UE, configuré avec un groupe de cellules maître, MCG, et un groupe de cellules secondaire, SCG, dans un réseau sans fil, le procédé comprenant :
la détermination (2420) de la disponibilité de données de liaison montante, UL, pour une transmission via le SCG ;
le calcul (2435) d'un volume de données UL disponibles ;
le fait de déterminer si le SCG est dans un état activé ou désactivé ;
la transmission d'un rapport d'état de tampon, BSR dans le SCG si le SCG est dans un état activé, sinon,
si le SCG est dans un état désactivé, la transmission (2440) d'un message UEAssistanceInformation RRC comportant une indication selon laquelle des données UL sont disponibles pour une transmission via le SCG au réseau sans fil via le MCG.

2. Procédé selon la revendication 1, comprenant en outre :
la réception (2410), à partir d'un premier noeud configuré pour fournir le MCG, d'une première indication selon laquelle le SCG doit être désactivé ; et
la désactivation (2415) du SCG en réponse à la première indication.

3. Procédé selon la revendication 2, dans lequel la désactivation (2415) du SCG comprend en outre l'arrêt ou la mise en pause (2416) d'un ou de plusieurs temporisateurs associés au rapport périodique de volume de données UL disponibles associé au SCG.

4. Procédé selon l'une quelconque des revendications 1 à 3, dans lequel la transmission (2440) de l'indication selon laquelle les données UL sont disponibles pour une transmission via le SCG comprend :
la réception (2443), à partir d'un second noeud configuré pour fournir le SCG, d'une autorisation UL pour une transmission d'un rapport d'état de tampon, BSR ; et
la transmission (2445) du BSR indiquant un volume de données UL disponibles au second noeud via le SCG, à l'aide de l'autorisation UL reçue.

5. Procédé selon la revendication 4, dans lequel :
la transmission (2440) de l'indication selon laquelle les données UL sont disponibles pour une transmission via le SCG comprend en outre l'envoi (2442) d'une demande de planification, SR, au second noeud ;
l'autorisation UL est reçue en réponse à la SR ; et
l'une des conditions suivantes s'applique :
la SR et le BSR sont transmis pendant que le SCG est dans l'état désactivé ;
la SR est transmise pendant que le SCG est dans l'état désactivé et le BSR est transmis après l'activation du SCG ; ou
la SR et le BSR sont transmis après l'activation du SCG.

6. Procédé selon la revendication 5, dans lequel :
l'autorisation UL comporte une deuxième indication selon laquelle le SCG doit être activé ; et
la transmission (2440) de l'indication selon laquelle des données UL sont disponibles pour une transmission via le SCG comprend en outre l'activation (2444) du SCG en réponse à la deuxième indication et avant la transmission (2445) du BSR.

7. Procédé selon la revendication 4, dans lequel :
l'autorisation UL est une autorisation UL configurée pour une utilisation lorsque le SCG est dans l'état désactivé ; et
l'autorisation UL configurée est reçue à partir du second noeud avant la désactivation du SCG.

8. Procédé selon l'une quelconque des revendications 1 à 4, comprenant en outre l'activation (2425) du SCG sur la base de la détermination (2420) de la disponibilité des données UL.

9. Procédé selon la revendication 8, comprenant en outre le lancement (2430) d'un temporisateur en réponse à l'activation (2425) du SCG.

10. Procédé selon la revendication 9, comprenant en outre la désactivation (2470) du SCG à l'expiration du temporisateur après avoir signalé que des données UL sont disponibles pour une transmission via le SCG.

11. Procédé selon l'une quelconque des revendications 9 et 10, comprenant en outre :
avant l'expiration du temporisateur, la réception (2450) de l'un des éléments suivants à partir d'un second noeud qui est configuré pour fournir le SCG :
une troisième indication selon laquelle le SCG doit être activé, ou
une quatrième indication selon laquelle le SCG doit être désactivé ; et
l'arrêt du temporisateur (2460) en réponse à la troisième indication ou à la quatrième indication.

12. Procédé selon l'une quelconque des revendications 1 à 11, comprenant en outre :
la réception (2480), à partir d'un premier noeud configuré pour fournir le MCG, en réponse à l'indication selon laquelle des données UL sont disponibles pour une transmission via le SCG, d'une cinquième indication selon laquelle le SCG doit être activé ; et
l'activation (2490) du SCG en réponse à la cinquième indication.

13. Procédé selon l'une quelconque des revendications 1 à 12, dans lequel le calcul du volume de données UL disponibles est basé sur un ou plusieurs des éléments suivants :
un type de support associé aux données UL disponibles ;
si un MCG ou SCG a été configuré comme chemin principal de protocole de convergence de données par paquets, PDCP ; et
si la duplication PDCP est activée.

14. Procédé selon l'une quelconque des revendications 1 à 13, dans lequel :
la transmission (2440) de l'indication selon laquelle des données UL sont disponibles pour une transmission via le SCG est basée sur la détermination (2441) que le volume de données UL disponibles est supérieur à un premier seuil applicable lorsque le SCG est dans l'état désactivé ; et
le premier seuil est différent d'un second seuil applicable lorsque le SCG est dans un état activé.

15. Procédé pour un premier noeud configuré pour fournir un groupe de cellules maître, MCG, pour un équipement utilisateur, UE, qui est également configuré avec un groupe de cellules secondaire, SCG, dans un réseau sans fil, le procédé comprenant :
la réception (2620), à partir de l'UE pendant que le SCG est dans un état désactivé, d'un message UEAssistanceInformation RRC comportant une indication selon laquelle des données de liaison montante, UL, sont disponibles pour une transmission via le SCG ; et
la transmission (2630) de l'indication selon laquelle des données UL sont disponibles pour une transmission via le SCG à un second noeud configuré pour fournir le SCG.

16. Procédé selon la revendication 15, comprenant en outre :
la réception (2640), à partir du second noeud en réponse à l'indication selon laquelle des données UL sont disponibles pour une transmission via le SCG, d'une deuxième indication selon laquelle le SCG doit être activé ; et
la transmission (2650) de la deuxième indication à l'UE.

17. Équipement utilisateur, UE (120, 505, 605, 1710, 3010, 3100, 3430), configuré avec un groupe de cellules maître, MCG, et un groupe de cellules secondaire, SCG, dans un réseau sans fil (100, 399, 599, 699, 2843), l'UE étant en outre configuré pour :
déterminer une disponibilité de données de liaison montante, UL, pour une transmission via le SCG ;
calculer un volume de données UL disponibles ;
déterminer si le SCG est dans un état activé ou désactivé ;
transmettre un rapport d'état de tampon, BSR, dans le SCG si le SCG est dans un état activé ; sinon,
si le SCG est dans un état désactivé, transmettre un message UEAssistanceInformation RRC comportant une indication selon laquelle des données UL sont disponibles pour une transmission via le SCG au réseau sans fil via le MCG.

18. UE selon la revendication 17, étant en outre configuré pour exécuter des opérations correspondant à l'un quelconque des procédés selon les revendications 2 à 14.

19. Produit de programme informatique (2825, 3131) comprenant des instructions exécutables par ordinateur qui, lorsqu'elles sont exécutées par des circuits de traitement (2720, 2801, 3138) d'un équipement utilisateur, UE (120, 505, 605, 1710, 3010, 3100, 3430) configuré avec un groupe de cellules maître, MCG, et un groupe de cellules secondaire, SCG, dans un réseau sans fil (100, 399, 599, 699, 2843), configurent l'UE pour exécuter des opérations correspondant à l'un quelconque des procédés selon les revendications 1 à 14.

20. Premier noeud (105, 110, 115, 300, 350, 510, 520, 610, 620, 1720, 2760, 2930, 3120) configuré pour fournir un groupe de cellules maître, MCG, pour un équipement utilisateur, UE (120, 505, 605, 1710, 3010, 3100, 3430) qui est également configuré avec un groupe de cellules secondaire, SCG, dans un réseau sans fil (100, 399, 599, 699, 2843), le premier noeud étant en outre configuré pour :
recevoir, à partir de l'UE pendant que le SCG est dans un état désactivé, un message UEAssistanceInformation RRC comportant une indication selon laquelle des données UL sont disponibles pour une transmission via le SCG ; et
transmettre l'indication selon laquelle des données UL sont disponibles pour une transmission via le SCG à un second noeud configuré pour fournir le SCG.

21. Premier noeud selon la revendication 20, étant en outre configuré pour exécuter des opérations correspondant au procédé selon la revendication 16.

22. Produit de programme informatique (2995, 3121) comprenant des instructions exécutables par ordinateur qui, lorsqu'elles sont exécutées par des circuits de traitement (2770, 2960, 3128) d'un premier noeud (105, 110, 115, 300, 350, 510, 520, 610, 620, 1720, 2760, 2930, 3120) configuré pour fournir un groupe de cellules maître, MCG, pour un équipement utilisateur, UE (120, 505, 605, 1710, 3010, 3100, 3430) dans un réseau sans fil (100, 399, 599, 699, 2843), configurent le premier noeud pour exécuter des opérations correspondant à l'un quelconque des procédés selon les revendications 15 et 16.
